# EUROPÄISCHE PATENTANMELDUNG

(11) **EP 4 382 355 A1**
(43) Veröffentlichungstag der Anmeldung: **12.06.2024**
(21) Anmeldenummer: 23214819.7
(22) Anmeldetag: 07.12.2023
(51) Int. Cl.: B60N 2/01, B60N 2/015, B60N 2/02, B60N 2/90

(54) **STECKEINHEIT, STECKVERBINDER, SITZANORDNUNG UND FAHRZEUG**

(30) Priorität: 07.12.2022 DE 102022213228; 22.03.2023 DE 102023202556
(71) Anmelder: Adient US LLC, Plymouth, MI 48170 (US)
(72) Erfinder: HEEG, Norbert, 66994 Dahn (DE); ROCK, Arkadius, 42719 Solingen (DE); MEDVED, Andrej, 911 05 Trencín (SK); MAYER, Thomas, 42477 Radevormwald (DE); PROSCH, Mark Thomas, 42653 Solingen (DE)
(74) Vertreter: Liedtke & Partner Patentanwälte

(57) **Zusammenfassung**

Steckeinheit (222) für einen Steckverbinder (224), wobei die Steckeinheit (222) mindestens:
- ein Gehäuse (248),
- einen Stecker (240) mit einer Anzahl von Steckkontakten,
- eine Auslöseeinheit (250) und
- eine Antriebseinheit (252) umfasst,
wobei die Auslöseeinheit (250) bei Auslösung die Antriebseinheit (252) entsperrt oder freigibt, so dass der Stecker (240) angetrieben von der Antriebseinheit (252) relativ zum Gehäuse (248) von einer Ruheposition (302) in eine Steckposition (300) bewegbar ist.

Des Weiteren betrifft die Offenbarung einen Steckverbinder (224), eine Sitzanordnung (201) und ein Fahrzeug (200).

## Beschreibung

Die Erfindung betrifft eine Steckeinheit für einen Steckverbinder, einen Steckverbinder für eine Sitzanordnung, eine Sitzanordnung mit einem Sitz oder mehreren Sitzen und ein Fahrzeug mit mindestens einer Sitzanordnung.

### Stand der Technik

Sitze in Fahrzeugen sind meist fest mit dem Fahrzeug verbunden. Sie werden als nicht ausbaubare Sitze installiert. Um die Variabilität von Fahrzeugen, insbesondere von VANS, zu verbessern, werden die Sitze zunehmend so gestaltet, dass sie vom Benutzer ausgebaut werden können. Die Sitze haben verschiedene elektrische Funktionen wie Heizung, Belüftung, Gurtstraffer oder dergleichen. Um diese Funktionen mit Strom und/oder Informationen zu versorgen, verfügen diese Sitze über einen elektrischen Anschluss. Ein Einbau oder Ausbau derartiger Sitze mit elektrischem Anschluss ist für den Benutzer aufgrund vieler erforderlicher Handhabungen sehr aufwendig. Derzeit werden beispielsweise die elektrischen Verbindungen mittels Steckverbinder manuell von Hand hergestellt, das heißt der Benutzer steckt und drückt einen elektrischen Stecker in eine Buchse, bis eine Verriegelung den Stecker verriegelt. Die Positionierung dieser Steckertypen erfolgt immer manuell durch den Benutzer oder den Bediener. Ein Lösen oder Stecken des Steckers erfolgt üblicherweise selten, insbesondere weniger als zehn Mal während der Lebensdauer der Sitzanordnung, zum Beispiel hauptsächlich aufgrund von Wartung. In der älteren Anmeldung DE 10 2022 206 128 A1 ist ein Stecker bekannt, welcher durch einen Verriegelungsnocken in einer zurückgezogenen Position haltbar ist. Aus der DE 10 2020 123 902 A1 ist eine Führungsbahnbaugruppe mit einem elektrischen Verbinder bekannt.

### Aufgabe

Der Erfindung liegt die Aufgabe zu Grunde, eine verbesserte Steckeinheit für einen Steckverbinder, einen Steckverbinder mit einer solchen verbesserten Steckeinheit und eine Sitzanordnung mit einer solchen verbesserten Steckeinheit sowie ein Fahrzeug mit mindestens einer solchen Sitzanordnung bereitzustellen.

### Lösung

Die erstgenannte Aufgabe wird erfindungsgemäß durch eine Steckeinheit mit den Merkmalen des Anspruchs 1 gelöst. Die zweitgenannte Aufgabe wird erfindungsgemäß durch eine Sitzanordnung mit den Merkmalen des Anspruchs 13 gelöst. Die drittgenannte Aufgabe wird erfindungsgemäß durch ein Fahrzeug mit den Merkmalen des Anspruchs 15 gelöst.

Die erfindungsgemäße Steckeinheit umfasst zumindest ein Gehäuse, einen Stecker mit einer Anzahl von Steckkontakten, eine Auslöseeinheit und eine Antriebseinheit, wobei die Auslöseeinheit beweglich an dem Gehäuse gelagert ist und bei Auslösung die Antriebseinheit entsperrt, so dass der Stecker angetrieben von der Antriebseinheit relativ zum Gehäuse von einer Ruheposition (auch Offenstellung oder Öffnungsstellung genannt) in eine Steckposition (auch Kontaktierstellung genannt) bewegbar ist. Bevorzugt kontaktiert der Stecker automatisch mit einer korrespondierenden Buchse. Die Steckeinheit ist separat ausgebildet. Die Steckeinheit ist insbesondere als ein Montagemodul ausgebildet. Mit anderen Worten: Die Steckeinheit ist modular aufgebaut. Das Gehäuse, der Stecker, die Auslöseeinheit und die Antriebseinheit der Steckeinheit bilden in einem zusammengebauten Zustand das Montagemodul.

Der Steckverbinder ist als ein elektrischer Steckverbinder ausgebildet. Der Steckverbinder wird auch Kontaktierungsvorrichtung genannt.

Die Auslöseeinheit (auch Sperreinheit genannt) kann beispielsweise so ausgestaltet sein, dass diese bei Auslösung in eine Auslösestellung (auch Entsperrstellung genannt) stellbar ist, wodurch die Antriebseinheit entsperrt (auch aktiviert oder gelöst genannt) wird, die wiederum eine Steckbewegung des Steckers bewirkt. Die Auslöseeinheit kann beispielsweise mit einer Sitzverriegelung einer Sitzanordnung gekoppelt sein. Zusätzlich kann eine Rückstelleinheit für den Stecker vorgesehen sein, die ebenfalls mit der Sitzverriegelung gekoppelt ist.

Die Auslöseeinheit kann insbesondere an einem oberen Ende des Gehäuses beweglich, insbesondere schwenkbar, angeordnet sein.

Die Auslöseeinheit kann zum Beispiel zumindest ein bewegbares Verriegelungselement (auch Sperrelement genannt) umfassen, das in einer ersten Stellung (auch Sperrstellung genannt) die Antriebseinheit sperrt und den Stecker in seiner Ruheposition (auch nicht gesteckte Position oder Öffnungsstellung genannt) hält und in einer zweiten Stellung (auch Auslösestellung oder Entsperrstellung genannt) die Antriebseinheit entsperrt, um insbesondere die Antriebseinheit freizugeben und den Stecker aus der Ruheposition in die Steckposition zu verstellen.

Das Verriegelungselement (auch Sperrelement oder Arretierelement genannt) kann beispielsweise um eine Schwenkachse verschwenkbar am Gehäuse gelagert sein. Das Verriegelungselement kann beispielsweise manuell betätigbar sein. Alternativ oder zusätzlich kann das Verriegelungselement mit einer Sitzverriegelung koppelbar sein. Beispielsweise können das Verriegelungselement und die Sitzverriegelung derart miteinander gekoppelt sein, dass bei einer Betätigung der Sitzverriegelung zur Verriegelung des Sitzes, der Sitzgruppe oder der Sitzbank automatisch das Verriegelungselement betätigt, insbesondere in die zweite Stellung (= Auslösestellung oder Entsperrstellung), stellbar ist, um automatisch bei der Betätigung der Sitzverriegelung die Antriebseinheit freizugeben und den Stecker aus der Ruheposition in die Steckposition zu verstellen. Mit anderen Worten: Wenn ein Sitz, eine Sitzgruppe oder eine Sitzbank an der richtigen Position im Fahrzeug gestellt ist und die Sitzverriegelung zum Arretieren des Sitzes, der Sitzgruppe oder der Sitzbank betätigt wird, ist automatisch eine Steckverbindung der Steckeinheit mit einer komplementären Buchse herstellbar. Alternativ kann umgekehrt bei einer Betätigung der Sitzverriegelung zur Entriegelung des Sitzes, der Sitzgruppe oder der Sitzbank automatisch das Verriegelungselement in umgekehrte Richtung betätigt, insbesondere in die erste Stellung (= Sperrstellung) gestellt werden, um die Antriebseinheit zu sperren, wenn der Stecker aus der Steckposition in die Ruheposition zusammen mit der Antriebseinheit zurückgestellt ist.

Das Verriegelungselement kann beispielsweise als ein Exzenter, zum Beispiel eine Exzenterscheibe oder ein Exzenterhebel oder ein Verriegelungsstift oder dergleichen, ausgebildet sein. Durch eine Ausbildung des Verriegelungselements als Exzenter ist eine hinreichend große Verriegelungskraft bei kleinem Entriegelungshub ermöglicht. Mittels eines einfachen Verriegelungsstifts, der beispielsweise von einem mechanischen Verriegelungssystem, insbesondere einem Easy-Mount-System, gesteuert bewegt wird, ist ein besonders einfacher und kompakter Stecker mit Verriegelungsfunktion gegeben. Das Verriegelungselement ist zwischen einer Verriegelungsposition (auch Sperrposition oder Ruheposition genannt), in welcher der Stecker verriegelt und nicht gesteckt ist, und einer Steckposition (auch Freigabeposition oder Entriegelungsposition genannt), in welcher der Stecker entriegelt und für eine Kontaktierung freigegeben ist, bewegbar.

Zusätzlich kann das Verriegelungselement mittels einer Feder in einer vorgegebenen Drehwinkelstellung, insbesondere in einer Ruheposition oder Verriegelungsposition, arretierbar sein. Insbesondere ist das Verriegelungselement in einer, der eingestellten Vorspannung der Feder, insbesondere einer Vorspannfeder, entsprechenden Drehwinkelstellung zur Sicherstellung der lösbaren Verriegelung der Antriebseinheit arretierbar.

Beispielsweise kann das Verriegelungselement einen Sperrabschnitt umfassen, der in der ersten Stellung des Verriegelungselements sperrend in eine Sperröffnung eines Schiebers eingreift. Der Schieber kann beispielsweise mit der Antriebseinheit bewegungsgekoppelt sein. Insbesondere kann der Schieber beweglich im Gehäuse gelagert und geführt sein. Beispielsweise kann der Stecker sich am Schieber abstützen und mit diesem Schieber beweglich im Gehäuse gelagert und geführt sein.

Die zweitgenannte Aufgabe wird erfindungsgemäß durch einen Steckverbinder gelöst, der zumindest die zuvor beschriebene Steckeinheit und eine zu der Steckeinheit komplementäre Buchse zur Herstellung von elektrischen Verbindungen zwischen elektrischen Komponenten umfasst, wobei der Stecker bei der Bewegung in die Steckposition automatisch mit der Buchse kontaktiert.

Die drittgenannte Aufgabe wird erfindungsgemäß gelöst durch eine Sitzanordnung mit mindestens einem Sitz, einer Sitzgruppe und/oder einer Sitzbank, wobei der Sitz, die Sitzgruppe oder die Sitzbank jeweils mindestens die zuvor beschriebene Steckeinheit zur Herstellung von elektrischen Verbindungen zwischen elektrischen Komponenten umfasst.

Bevorzugt kann der jeweilige Sitz, die jeweilige Sitzgruppe oder die jeweilige Sitzbank jeweils zwei Steckeinheiten umfassen, die derart montiert sind, dass der Sitz, die Sitzgruppe oder die Sitzbank jeweils in unterschiedlichen Ausrichtungen in einem Fahrzeug montierbar und mittels einer der Steckeinheiten mit einer komplementären Buchse koppelbar ist.

Zusätzlich kann der Sitz oder die Sitzgruppe oder die Sitzbank jeweils mit zumindest einer Sitzlängsverstelleinrichtung zur Längsverstellung koppelbar sein und eine Sitzverriegelung zur Befestigung an der Sitzlängsverstelleinrichtung sowie einen Steckverbinder (auch Kontaktierungsvorrichtung genannt) mit der zuvor beschriebenen Steckeinheit zur Herstellung von elektrischen Verbindungen zwischen elektrischen Komponenten umfassen. Die Sitzverriegelung und der jeweilige Steckverbinder sind bevorzugt derart miteinander gekoppelt, dass die elektrischen Verbindungen automatisch hergestellt werden oder herstellbar sind, wenn der Sitz mittels der Sitzverriegelung verriegelt wird beziehungsweise nachdem der Sitz mittels der Sitzverriegelung verriegelt ist. Mit anderen Worten: Um den Sitz, die Sitzgruppe oder die Sitzbank bei verriegeltem Sitz und bei einer gewünschten Sitzlängsverstellung weiterhin elektrisch zu versorgen, bleibt bei einer Betätigung der Sitzlängsverstelleinrichtung die elektrische Verbindung erhalten und wird nicht gelöst. Alternativ oder zusätzlich können die Sitzverriegelung und der jeweilige Steckverbinder derart miteinander gekoppelt sein, dass die elektrischen Verbindungen automatisch gelöst werden oder sind, wenn der Sitz entriegelt wird oder nachdem der Sitz entriegelt worden ist.

Die Sitzanordnung kann einen einzelnen verstellbaren Sitz, eine verstellbare Sitzbank oder verstellbare Sitzgruppe mit zwei nebeneinander angeordneten Sitzen oder eine verstellbare Sitzbank oder eine verstellbare Sitzgruppe mit drei oder mehreren nebeneinander angeordneten Sitzen umfassen. Insbesondere ist der Sitz, die Sitzgruppe oder Sitzbank längsverstellbar. Hierzu umfasst der Sitz, die Sitzgruppe oder die Sitzbank jeweils zwei Sitzschienen (auch Oberschienen oder Gleiter oder Schieber genannt), die parallel zueinander angeordnet sind. Die Sitzschienen sind insbesondere an einer Unterseite eines Sitzteils oder einer Sitzfläche des Sitzes, der Sitzgruppe oder der Sitzbank angeordnet.

Die Sitzanordnung, die entweder einen verstellbaren Sitz oder eine verstellbare Sitzbank oder eine verstellbare Sitzgruppe umfasst, kann beispielsweise nur zwei elektrische Kontaktierungsbereiche aufweisen, die diagonal einander gegenüberliegend angeordnet sind. Die elektrischen Kontaktierungsbereiche sind insbesondere eingerichtet, jeweils die zuvor beschriebene Steckeinheit oder eine Attrappe (auch Dummy genannt) aufzunehmen. Mit anderen Worten: Ein erster der elektrischen Kontaktierungsbereiche ist aktiv, wenn die Steckeinheit gesteckt ist. Ein zweiter Kontaktierungsbereich oder der andere elektrische Kontaktierungsbereich ist passiv, wenn die Attrappe gesteckt ist. Es können auch zwei Kontaktierungsbereiche aktiv durch gesteckte Steckeinheiten ausgebildet sein. Ob nur einer der Kontaktierungsbereiche oder beide Kontaktierungsbereiche aktiv sind, hängt insbesondere von der Anzahl der elektrischen Komponenten und Funktionen der Sitzanordnung ab. Durch eine solche Anordnung der elektrischen Kontaktierung der Sitze, Sitzbank und/oder Sitzgruppe kann die Anzahl an Steckern oder Steckeinheiten im Fahrzeug reduziert werden.

Die elektrischen Kontaktierungsbereiche sind sitzseitig jeweils mit mindestens einem Steuergerät verbunden. Mit anderen Worten: Die elektrischen Kontaktierungsbereiche sind beispielsweise mit dem Steuergerät signaltechnisch und elektrisch gekoppelt. Die elektrischen Kontaktierungsbereiche der Sitzanordnung sind insbesondere identisch ausgebildet. Mit anderen Worten: Die elektrischen Kontaktierungsbereiche weisen die gleiche Anzahl von elektrischen Verbindungen und Kontakten auf. Die elektrischen Kontaktierungsbereiche können an der Sitzanordnung entlang einer Ausdehnungsachse, insbesondere in Längsausdehnung des Fahrzeugs, vorzugsweise spiegelsymmetrisch zueinander angeordnet sein.

Dadurch wird ein Komfort für den Benutzer verbessert. Insbesondere ermöglicht eine solche als elektrischer Steckverbinder ausgebildete Kontaktierungsvorrichtung eine Entlastung des Benutzers beim elektrischen Ankoppeln oder Abkoppeln des Sitzes während eines Einbaus beziehungsweise Ausbaus des Sitzes in beziehungsweise aus dem Fahrzeug. Vorzugsweise ist der Steckverbinder derart eingerichtet, dass die elektrischen Verbindungen automatisch herstellbar sind oder hergestellt werden, während der Sitz beim Einbau mechanisch verriegelt wird oder nachdem der Sitz beim Einbau mechanisch verriegelt ist. Mit anderen Worten: Die elektrische Verbindung wird automatisch hergestellt, nachdem der Sitz mechanisch verriegelt wurde und kann auch automatisch wieder gelöst werden, wenn der Benutzer den Sitz entriegelt, um diesen beispielsweise aus dem Fahrzeug entnehmen zu können oder im Fahrzeug umsetzen zu können.

Darüber hinaus kann die als Steckverbinder ausgebildete Kontaktierungsvorrichtung weitere Funktionen zur Sicherheitserkennung und/oder Positionserkennung umfassen. Eine derartige Sicherheitserkennung und/oder Positionserkennung, insbesondere integriert in die Kontaktierungsvorrichtung, ermöglicht beispielsweise eine Erkennung, ob der Fahrzeugsitz korrekt eingebaut und/oder verriegelt ist und wo er im Fahrzeug eingebaut, insbesondere positioniert, ist. Auch können als Status dieser Funktionen, insbesondere ein verriegelter Zustand, ein nicht verriegelter Zustand, eine korrekte Verriegelung und/oder die momentane Position oder dergleichen dem Benutzer mittels einer Ausgabeeinheit, insbesondere einer Statusanzeige, angezeigt werden.

Die Kontaktierungsvorrichtung kann darüber hinaus im verbundenen Zustand mittels elektrischer Verbindungen eine Stromversorgung, Informationen und/oder Sicherheitsfunktionen, wie zum Beispiel eine Stromversorgung für einen Gurtstraffer und/oder einen Airbag am Fahrzeugsitz, bereitstellen.

Die viertgenannte Aufgabe wird erfindungsgemäß gelöst durch ein Fahrzeug mit der zuvor beschriebenen Sitzanordnung.

Vorteilhafte Ausgestaltungen, welche einzeln oder in Kombination miteinander eingesetzt werden können, sind Gegenstand der nachfolgend beschriebenen Weiterbildungen und Ausführungsbeispiele.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: in schematischer Darstellung einen Fahrzeugsitz mit einer Längsverstelleinrichtung nach dem Stand der Technik,
- Fig. 2:: schematisch einen Ausschnitt eines Fahrzeugs mit einer zweiten Sitzreihe und einer dritten Sitzreihe, in welcher jeweils mindestens ein Sitz angeordnet ist,
- Fig. 3:: in perspektivischer Darstellung ein Schienenpaar mit einer als eine Bodenschiene ausgebildeten Unterschiene und zwei in der Bodenschiene beweglich angeordneten als Sitzschienen ausgebildeten Oberschienen,
- Fig. 4:: in perspektivischer Darstellung verschiedene Sitzanordnungen mit einem Sitz, zwei Sitzen und drei Sitzen,
- Fig. 4A:: in schematischer Blockdarstellung eine aktive Oberschiene,
- Fig. 4B:: in schematischer Blockdarstellung eine passive Oberschiene,
- Fig. 5:: in Explosionsdarstellung eine als Steckverbinder ausgebildete Kontaktierungsvorrichtung, umfassend eine Steckeinheit und eine Buchse, wobei die Steckeinheit entsperrt und in einer Steckposition gezeigt ist,
- Fig. 6:: schematisch in perspektivischer Darstellung die Steckeinheit in einer Sperrposition,
- Fig. 7:: schematisch in Seitenansicht die Steckeinheit gemäß Figur 6,
- Fig. 8:: schematisch in Schnittdarstellung die Steckeinheit gemäß Figur 7,
- Fig. 9:: die Steckeinheit gemäß Figur 7 in einer Ansicht von unten,
- Fig.10:: schematisch in Seitenansicht die Steckeinheit in einer Steckposition,
- Fig. 11:: schematisch in Schnittdarstellung die Steckeinheit gemäß Figur 10,
- Fig. 12:: schematisch in perspektivischer Darstellung die Steckeinheit mit einem alternativen Verriegelungselement in einer Verriegelungsposition oder Sperrposition und mit einer elektrischen Schnittstelle,
- Fig. 13:: schematisch in perspektivischer Darstellung die Steckeinheit gemäß Figur 12 mit dem alternativen Verriegelungselement in einer Steckposition oder Freigabeposition,
- Fig. 14:: schematisch in Seitenansicht die Steckeinheit mit der elektrischen Schnittstelle und dem alternativen Verriegelungselement in der Verriegelungsposition gemäß Figur 12, und
- Fig. 15:: schematisch in Schnittdarstellung die Steckeinheit gemäß Figur 14.

Einander entsprechende Teile sind in allen Figuren mit den gleichen Bezugszeichen versehen.

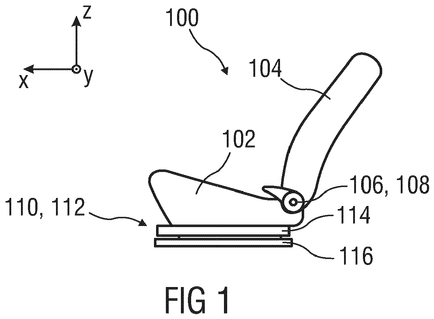

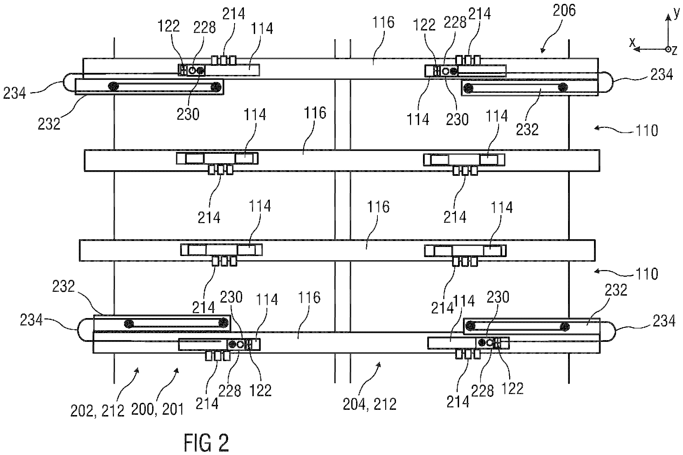

Ein in der Figur 1 zum Stand der Technik schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug 200 (dargestellt in Figur 2) eingebauten Fahrzeugsitz 100 weitgehend horizontal und vorzugsweise parallel zu einer Fahrzeuglängsrichtung, die der gewöhnlichen Fahrtrichtung des Fahrzeugs 200 entspricht. Eine zu der Längsrichtung x senkrecht verlaufende Querrichtung y ist im Fahrzeug 200 ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug 200 eingebauten Fahrzeugsitz 100 verläuft die Vertikalrichtung z vorzugsweise parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeugsitz 100 sitzenden Insassen in normaler Sitzposition, wobei der Fahrzeugsitz 100 im Fahrzeug 200 eingebaut, in einer zur Personenbeförderung geeigneten Gebrauchsposition mit aufrecht stehender Rückenlehne 104 und wie üblich in Fahrtrichtung ausgerichtet ist. Der Fahrzeugsitz 100 kann jedoch auch in abweichender Ausrichtung, beispielsweise quer zur Fahrtrichtung, verbaut oder bewegt werden. Soweit nicht abweichend beschrieben, ist der Fahrzeugsitz 100 spiegelsymmetrisch zu einer senkrecht zur Querrichtung y verlaufenden Ebene aufgebaut.

Die Rückenlehne 104 kann schwenkbar an einem Sitzteil 102 des Fahrzeugsitzes 100 angeordnet sein. Hierzu kann der Fahrzeugsitz 100 optional einen Beschlag 106, insbesondere einen Einstellbeschlag, Drehbeschlag, Rastbeschlag oder Taumelbeschlag, umfassen.

Die verwendeten Positionsangaben und Richtungsangaben, wie beispielsweise radial, axial und in Umfangsrichtung, beziehen sich auf eine Drehachse 108 des Beschlags 106. Radial bedeutet senkrecht zu der Drehachse 108. Axial bedeutet in Richtung oder parallel zu der Drehachse 108.

Der Fahrzeugsitz 100 kann optional eine Längsverstelleinrichtung 110 umfassen. Die Längsverstelleinrichtung 110 umfasst beispielsweise eine Schienenanordnung 112 mit einem ersten Schienenelement 114 und einem zweiten Schienenelement 116. Das erste Schienenelement 114 ist relativ in Längsrichtung x zum zweiten Schienenelement 116 verstellbar. Das erste Schienenelement 114 ist an dem Sitzteil 102 befestigt. Das zweite Schienenelement 116 ist an einem Strukturelement eines Fahrzeugs 200, zum Beispiel einem Fahrzeugboden, befestigt.

Zur besseren Übersichtlichkeit wird das erste Schienenelement 114 in der nachfolgenden Beschreibung als Oberschiene 114 bezeichnet. Diese Oberschiene 114 (auch Laufschiene oder Schlitten genannt) ist dem Fahrzeugsitz 100 zugeordnet und eingerichtet, diesen Fahrzeugsitz 100 zu tragen. Das zweite Schienenelement 116 wird im Weiteren als Unterschiene 116 bezeichnet. Die Unterschiene 116 ist fest und beispielsweise mit dem Boden eines Fahrzeugs 200 verbunden.

Figur 2 zeigt schematisch einen Ausschnitt eines Fahrzeugs 200 mit einer Sitzanordnung 201, umfassend eine sogenannte zweite Sitzreihe 202 und eine dritte Sitzreihe 204, welche üblicherweise hinter einer als Fahrerreihe ausgebildeten ersten Sitzreihe (nicht dargestellt) angeordnet sind.

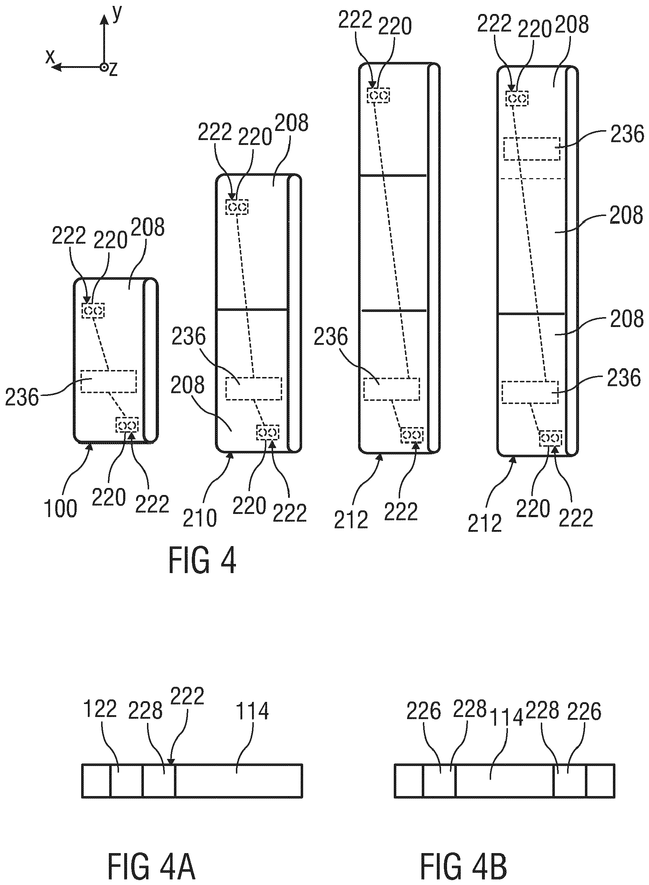

Das Fahrzeug 200 umfasst im Bodenbereich 206 zwei Paare von über die zweite Sitzreihe 202 und die dritte Sitzreihe 204 durchgehenden Unterschienen 116 der Längsverstelleinrichtung 110. Je Paar von Unterschienen 116 und je Sitzreihe 202 und 204 können in Querrichtung y zwei als verstellbare, insbesondere längsverstellbare, Einzelsitze ausgebildete Sitze 100 (dargestellt in Figur 4) nebeneinander oder nur eine zwei Sitzflächen 208 umfassende verstellbare, insbesondere längsverstellbare, Sitzgruppe 210 (dargestellt in Figur 4) oder nur eine drei Sitzflächen 208 umfassende verstellbare, insbesondere längsverstellbare, Sitzbank 212 (dargestellt in Figur 4) an der Längsverstelleinrichtung 110 lösbar und von der Längsverstelleinrichtung 110 abnehmbar angeordnet sein.

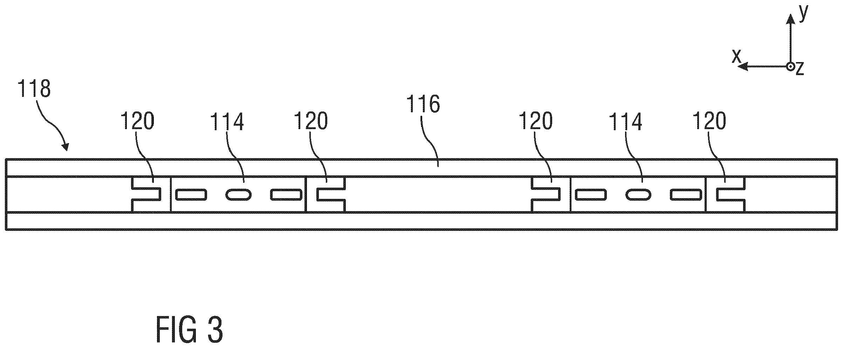

Je Paar von Unterschienen 116 und je Sitzreihe 202 und 204 (dargestellt in Figur 2) können beispielsweise beliebige Kombinationen von Sitzen 100, Sitzgruppen 210 und Sitzbänken 212 mit der Längsverstelleinrichtung 110 (dargestellt in Figur 3) koppelbar sein. Beispielsweise können in Längsrichtung x je zwei als Einzelsitze ausgebildete Sitze 100 (dargestellt in Figur 4) hintereinander oder zwei Sitzgruppen 210 mit je zwei Sitzflächen 208 hintereinander oder zwei drei Sitzflächen 208 umfassende Sitzbänke 212 hintereinander oder eine Kombination von zwei separaten Sitzen 100 nebeneinander und einer Sitzgruppe 210 oder einer Sitzbank 212 hintereinander an der Längsverstelleinrichtung 110 lösbar und von der Längsverstelleinrichtung 110 abnehmbar angeordnet sein.

An dem jeweiligen Sitz 100 oder der Sitzgruppe 210 oder der Sitzbank 212 ist zumindest ein Paar von Oberschienen 114 zur Kopplung mit den Bodenschienen 116 vorgesehen. Die Oberschienen 114 sind an einer Unterseite von Sitz 100, Sitzgruppe 210 oder Sitzbank 212 angeordnet und befestigt.

Der jeweilige Sitz 100, die Sitzgruppe 210 oder die Sitzbank 212 kann jeweils zumindest eine Sitzverriegelung 214 (dargestellt in Figur 2) zur Verriegelung der Oberschienen 114 und der Unterschienen 116 miteinander zur Sperrung einer Längsbewegung der Oberschienen 114 relativ zur Unterschiene 116 oder umgekehrt umfassen.

Zur elektrischen Kopplung von elektrischen Komponenten und/oder elektronischen Komponenten, zum Beispiel mindestens eines Steuergeräts 236 (dargestellt in Figur 4), eines Airbagmoduls, einer Sitzheizung, eines Stellmotors oder dergleichen des jeweiligen Sitzes 100 oder der Sitzgruppe 210 oder der Sitzbank 212 mit einer sitzentfernten Stromversorgung und/oder mit anderen sitzentfernten elektrischen Komponenten und/oder elektronischen Komponenten kann der jeweilige Sitz 100, die Sitzgruppe 210 oder die Sitzbank 212 mindestens einen, bevorzugt zwei Kontaktierungsbereiche 220 (dargestellt in Figur 4) umfassen.

Die jeweilige Oberschiene 114 kann Gegenkontaktierungsbereiche 228 umfassen. Beispielsweise weist nur eine der Oberschienen 114 eines Schienenpaares 118 (dargestellt in Figur 3), das einem einzelnen Sitz 100 oder einer Sitzfläche 208 der Sitzgruppe 210 oder der Sitzbank 212 zugeordnet ist, einen Gegenkontaktierungsbereich 228 auf. Insbesondere weisen in der jeweiligen Sitzreihe 202 oder 204 nur die äußeren Oberschienen 114 jeweils einen Gegenkontaktierungsbereich 228 auf. Alternativ können alle Oberschienen 114 Gegenkontaktierungsbereiche 228 aufweisen. In einem solchen Fall können beispielsweise bei den äußeren Oberschienen 114 die Buchsen 230 (oder alternativ die in Figur 4 dargestellten Steckeinheiten 222) im Gegenkontaktierungsbereich 228 und bei den inneren Oberschienen 114 die Attrappen 226 (dargestellt in Figur 4B) im Gegenkontaktierungsbereich 228 gesteckt sein. Bei gesteckter Buchse 230 oder alternativ gesteckter Steckeinheit 222 in der Oberschiene 114 ist diese als eine aktive Schiene ausgebildet, wie zum Beispiel in Figur 4A gezeigt. Bei gesteckter Attrappe 226 im Gegenkontaktierungsbereich 228 der betreffenden Oberschiene 114 ist diese als eine passive Schiene ausgebildet, wie in Figur 4B gezeigt.

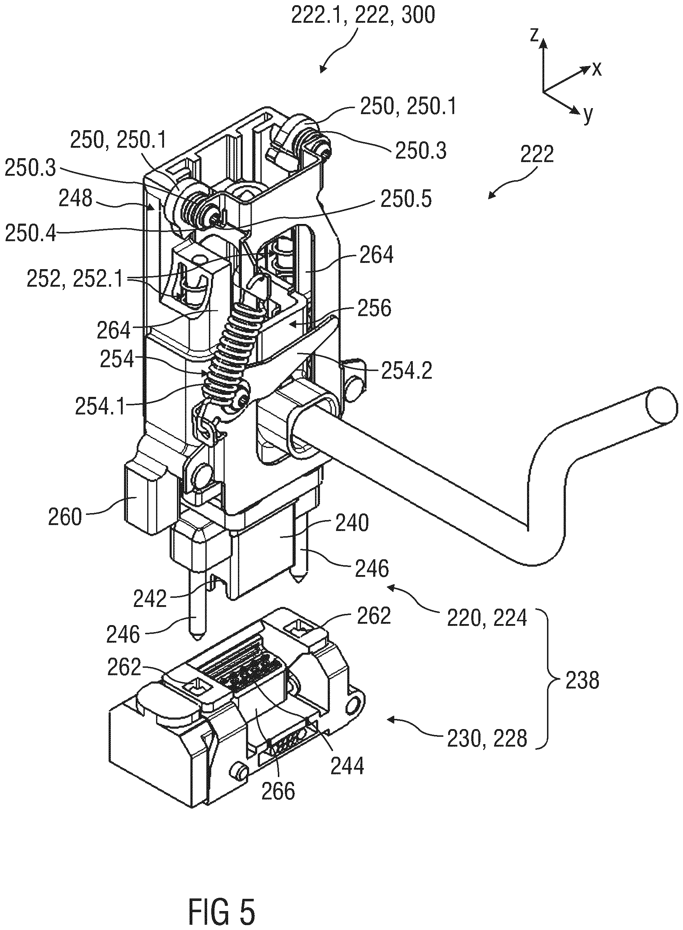

Die sitzseitigen Kontaktierungsbereiche 220 und die schienenseitigen Gegenkontaktierungsbereiche 228 sind derart angeordnet, dass sowohl zwei einzelne Sitze 100 als auch eine Sitzgruppe 210 oder eine Sitzbank 212 in der jeweiligen Sitzreihe 202 oder 204 angeordnet und elektrisch gekoppelt werden können, ohne dass ein Umbau erfolgen muss. Beispielsweise sind sitzseitig, das heißt an einer Unterseite des jeweiligen Sitzes 100 oder der Sitzgruppe 210 oder der Sitzbank 212, zwei Kontaktierungsbereiche 220 vorgesehen, die diagonal einander gegenüberliegend an der Unterseite angeordnet sind. Die Gegenkontaktierungsbereiche 228 sind beispielsweise nur an den äußersten Oberschienen 114 der jeweiligen Sitzreihe 202 oder 204 vorgesehen. Somit können sitzseitige elektrische Komponenten und/oder elektronische Komponenten des Sitzes 100 oder der Sitzgruppe 210 nur über einen Steckverbinder 224 (dargestellt in Figur 5) an einer der äußersten Oberschienen 114 elektrisch mit sitzentfernten Komponenten gekoppelt werden. Die sitzseitige elektrische Komponente und/oder elektronische Komponenten der Sitzbank 212 können demgegenüber beispielsweise über zwei elektrische Steckverbinder 224 an den beiden äußersten Oberschienen 114 elektrisch mit sitzentfernten Komponenten gekoppelt werden.

Der jeweilige Kontaktierungsbereich 220 ist eingerichtet, eine Steckeinheit 222 oder eine Buchse 230 einer der Steckverbinder 224 (auch Kontaktierungsvorrichtung genannt, dargestellt in Figur 5) oder eine Attrappe 226 (dargestellt in Figur 4B) aufzunehmen.

Mit anderen Worten: Der jeweilige Steckverbinder 224 umfasst als komplementäre Komponenten die Steckeinheit 222 und die korrespondierende Buchse 230. Dabei können die Steckeinheit 222 am Sitz 100, an der Sitzgruppe 210 oder der Sitzbank 212 und die Buchse 230 an der bewegbaren Oberschiene 114 oder umgekehrt angeordnet sein. Bei in die Buchse 230 eingesteckter Steckeinheit 222 ist zumindest eine elektrische Verbindung zwischen sitzentfernten Komponenten und sitzseitigen Komponenten hergestellt, zum Beispiel elektrische Verbindungen zwischen einer elektrischen Energieversorgungseinheit, zumindest einer Steuereinheit, zumindest einer Antriebseinheit und/oder weiterer elektrischer und/oder elektronischer Komponenten.

Der jeweilige Steckverbinder 224 und die jeweilige Sitzverriegelung 214 sind bevorzugt derart miteinander gekoppelt, dass die elektrischen Verbindungen des Steckverbinders 224 automatisch hergestellt werden oder herstellbar sind, wenn der Sitz 100 oder die Sitzgruppe 210 oder die Sitzbank 212 mittels der zugehörigen Sitzverriegelung 214 verriegelt wird beziehungsweise nachdem der Sitz 100 oder die Sitzgruppe 210 oder die Sitzbank 212 mittels der Sitzverriegelung 214 verriegelt ist. Alternativ oder zusätzlich können die Sitzverriegelung 214 und der jeweilige Steckverbinder 224 derart miteinander gekoppelt sind, dass die elektrischen Verbindungen automatisch gelöst werden oder sind, wenn der Sitz 100 oder die Sitzgruppe 210 oder die Sitzbank 212 entriegelt wird oder nachdem der Sitz 100 oder die Sitzgruppe 210 oder die Sitzbank 212 entriegelt worden ist.

Aufgrund der Ausbildung der Oberschienen 114 als bewegbare Schienen kann darüber hinaus an jenen Oberschienen 114, die als aktive Schienen mit gesteckter Steckeinheit 222 oder gesteckter Buchse 230 ausgebildet sind, eine Kabelkassette 232 zum automatischen Aufrollen oder Abrollen von Kabeln 234 der elektrischen Verbindungen bei der Verstellung der Oberschiene 114 zur Unterschiene 116 vorgesehen sein.

Zusätzlich kann die aktive Oberschiene 114 einen Sensor 122 umfassen. Der Sensor 122 kann beispielsweise als ein Positionssensor oder Verriegelungssensor zur Positionserkennung beziehungsweise zur Überwachung einer Verriegelung des Sitzes 100, der Sitzgruppe 210 oder der Sitzbank 212 ausgebildet sein.

Figur 3 zeigt in perspektivischer Darstellung ein Schienenpaar 118 mit einer als Bodenschiene ausgebildeten Unterschiene 116 und zwei in der Unterschiene 116 beweglich angeordneten Sitzschienen oder Oberschienen 114. Die Unterschiene 116 ist wesentlich länger als die beiden Oberschienen 114 ausgebildet. Die bewegbaren Oberschienen 114 umfassen jeweils endseitig, insbesondere stirnseitig, Befestigungsbereiche 120, insbesondere Befestigungselemente oder Befestigungsaufnahmen.

Die Befestigungsbereiche 120 können in Abhängigkeit von der Art der Sitzbefestigung unterschiedlich ausgebildet sein. Im gezeigten Ausführungsbeispiel nach Figur 3 sind die Befestigungsbereiche 120 als Klauenbefestigungen ausgebildet, die jeweils eine Aufnahmeöffnung umfassen, in welche nicht näher dargestellte Klauen des Fahrzeugsitzes 100 haltend eingreifen. Alternativ kann der jeweilige Befestigungsbereich 120 ausgelegt sein, um den Fahrzeugsitz 100 an der Oberschiene 114 mittels einer Schraubverbindung oder Schweißverbindung zu befestigen. Die Klauenbefestigung des Befestigungsbereiches 120 kann kraftschlüssig, formschlüssig und/oder stoffschlüssig an der Oberschiene 114 befestigt sein. Beispielsweise ist die jeweilige Klauenbefestigung oder Klauenaufnahme mittels einer Schweißverbindung an der Oberschiene 114 befestigt.

Figur 4 zeigt in perspektivischer Darstellung verschiedene Sitzanordnungen 201 für das Fahrzeug 200. Im Fahrzeug 200 können einzelne Fahrzeugsitze 100, eine oder mehrere Sitzgruppen 210 mit zwei Sitzflächen 208 und eine oder mehrere Sitzbänke 212 mit drei Sitzflächen 208 variabel auf der Längsverstelleinrichtung 110 (dargestellt in Figur 2) angeordnet sein. Zur elektrischen und/oder elektronischen Kopplung von Sitzkomponenten mit entfernten Komponenten weist sowohl jeder einzelne Fahrzeugsitz 100 als auch jede Sitzgruppe 210 oder jede Sitzbank 212 jeweils zwei Kontaktierungsbereiche 220 auf, die diagonal einander gegenüberliegend angeordnet sind.

Der jeweilige Kontaktierungsbereich 220 kann eingerichtet sein, eine Steckeinheit 222 oder eine Buchse 230 einer der Steckverbinder 224 (auch Kontaktierungsvorrichtung genannt, dargestellt in Figur 5) oder eine Attrappe 226 (dargestellt in Figur 4B) aufzunehmen.

Die Steckeinheit 222 oder die Buchse 230 (dargestellt in Figur 2) des jeweiligen Kontaktierungsbereiches 220 ist mit mindestens einem elektronischen Steuergerät 236 elektrisch und/oder signaltechnisch gekoppelt. Wie am Beispiel einer der Sitzbänke 212 dargestellt, können auch zwei elektronische Steuergeräte 236 (auch kurz ECU oder electronic control unit genannt) vorgesehen sein. Die Verkabelungen zwischen den Kontaktierungsbereichen 220 und den Steuergeräten 236 können vorgefertigt sein. Ist eine Steckeinheit 222 oder eine Buchse 230 gesteckt, so ist beim Koppeln mit der komplementären Komponente, einer Buchse 230 beziehungsweise einer Steckeinheit 222, dieser Kontaktierungsbereich 220 und damit die gekoppelte Oberschiene 114 aktiv, wie in Figur 4A gezeigt. Ist hingegen eine Attrappe 226 gesteckt, so ist die damit gekoppelte Oberschiene 114 passiv, wie in Figur 4B gezeigt.

Bevorzugt wird die Steckeinheit 222 des Steckverbinders 224 auf der Sitzseite an der Sitzstruktur des Fahrzeugsitzes 100, der Sitzgruppe 210 oder der Sitzbank 212 montiert.

Um den Fahrzeugsitz 100, die Sitzgruppe 210 oder die Sitzbank 212 in einer sogenannten Vis-a-Vis-Position zu anderen Fahrzeugsitzen 100, Sitzgruppen 210 oder Sitzbänken 212 zu montieren, umfasst die jeweilige Komponente - Fahrzeugsitz 100, Sitzgruppe 210 oder Sitzbank 212 - zwei Steckeinheiten 222 oder zwei Buchsen 230. Beide Steckeinheiten 222 (auch Sitzstecker genannt) oder beide Buchsen 230 sind vollständig in die Sitzverkabelung integriert, das heißt vorverkabelt, und bieten die gleichen Funktionen.

Auf der Fahrzeugseite, insbesondere an der Bodenschiene oder Unterschiene 116, ist nur ein komplementäres Element - nur eine Buchse 230 oder eine Steckeinheit 222 - installiert. Die Buchse 230 oder die Steckeinheit 222 (auch kurz Stecker genannt) ist immer im gleichen Verhältnis zum Sitzverriegelungssystem montiert. Fahrzeugsitze 100 und/oder Sitzgruppen 210 können in der zweiten Sitzreihe 202 rechts oder links und in der dritten Sitzreihe 204 rechts oder links montiert werden. Die Sitzbank 212 wird über die gesamte Breite der zweiten Sitzreihe 202 oder der dritten Sitzreihe 204 montiert.

Je nachdem, wo der Fahrzeugsitz 100 oder die Sitzgruppe 210 montiert wird (rechts oder links) oder wie der Fahrzeugsitz 100 oder die Sitzgruppe 210 eingebaut wird (in Fahrtrichtung oder gegen die Fahrtrichtung), kommt einer der beiden Steckeinheiten 222 oder die Buchse 230 mit der komplementären Komponente in der Unterschiene 116 mit der Buchse 230 beziehungsweise der Steckeinheit 222 (auch Fahrzeugstecker genannt) in Kontakt. Die Verkabelung oder das Kabelgeflecht des Fahrzeugsitzes 100, der Sitzgruppe 210 oder der Sitzbank 212 wird entsprechend gespleißt.

Figur 4A zeigt beispielhaft eine aktive Oberschiene 114 mit gesteckter Steckeinheit 222. Alternativ kann eine Buchse 230 gesteckt sein, wenn die Steckeinheit 222 sitzseitig angeordnet ist. Zusätzlich kann die aktive Oberschiene 114 den Sensor 122 (dargestellt in Figur 2) umfassen. Der Sensor 122 kann beispielsweise als ein Positionssensor oder Verriegelungssensor zur Positionserkennung beziehungsweise zur Überwachung einer Verriegelung des Fahrzeugsitzes 100, der Sitzgruppe 210 oder der Sitzbank 212 an der zugehörigen Oberschiene 114 ausgebildet sein. Der Sensor 122 kann insbesondere in den Steckverbinder 224 (dargestellt in Figur 5) integriert sein, zum Beispiel an der Steckeinheit 222 oder der Buchse 230. Der Sensor 122 ermöglicht beispielsweise eine Erkennung, ob der Fahrzeugsitz 100, die Sitzgruppe 210 oder die Sitzbank 212 korrekt eingebaut und/oder verriegelt ist und wo diese jeweils im Fahrzeug 200 eingebaut, insbesondere positioniert, sind. Auch können als Status dieser Funktionen, insbesondere ein verriegelter Zustand, ein nicht verriegelter Zustand, eine korrekte Verriegelung und/oder die momentane Position oder dergleichen dem Benutzer mittels einer Ausgabeeinheit (nicht dargestellt), insbesondere einer Statusanzeige, angezeigt werden.

Figur 4B zeigt beispielhaft eine passive Oberschiene 114 mit gesteckter Attrappe 226.

Figur 5 zeigt in Explosionsdarstellung eine als Steckverbinder 224 ausgebildete Kontaktierungsvorrichtung 238. Der Steckverbinder 224 umfasst die Steckeinheit 222 und die Buchse 230.

Die Kontaktierungsvorrichtung 238, insbesondere der Steckverbinder 224, umfasst als komplementäre Komponenten zumindest die eine Steckeinheit 222 mit einem Stecker 240 mit einer Anzahl von Anschlusskontakten 242, insbesondere mit einer Anzahl von Kontaktstiften und/oder Kontaktelementen, und die Buchse 230 mit einer Anzahl von korrespondierenden Kontaktgegenelementen 244, die beispielsweise als Stecköffnungen und aus einem elektrisch leitenden Material zur Herstellung einer elektrischen Verbindung gebildet sind. Die Buchse 230 ist an der bewegbaren Oberschiene 114 und die Steckeinheit 222 an dem Fahrzeugsitz 100, der Sitzgruppe 210 oder der Sitzbank 212 angeordnet (wie in Figuren 2 und 4 gezeigt) oder umgekehrt.

Die Steckeinheit 222 kann zusätzlich Positionierstifte 246 zum sicheren Ausrichten beim Koppeln mit der Buchse 230 aufweisen.

Die Steckeinheit 222 kann darüber hinaus ein Gehäuse 248, eine Auslöseeinheit 250 und eine Antriebseinheit 252 umfassen. Die Komponenten der Steckeinheit 222, insbesondere der Stecker 240, die Auslöseeinheit 250, die Antriebseinheit 252 und das Gehäuse 248, können zu einem Montagemodul 222.1 vormontiert sein. Insbesondere sind der Stecker 240, die Auslöseeinheit 250 und die Antriebseinheit 252 in dem und/oder an dem Gehäuse 248 montiert.

Dabei kann die Auslöseeinheit 250 an dem Gehäuse 248 beweglich gelagert sein. Insbesondere ist die Auslöseeinheit 250 an einem oberen Ende des Gehäuses 248 beweglich, insbesondere mittels eines Drehlagers 250.4 um eine Schwenkachse 250.5 schwenkbar, gelagert. Insbesondere ist die Auslöseeinheit 250 an einem von dem Stecker 240 abgewandten Ende an dem Gehäuse 248 beweglich gelagert. Mit anderen Worten: An einem Ende des Gehäuse 248 sind die Auslöseeinheit 250 und am gegenüberliegenden Ende der Stecker 240 angeordnet. Zwischen diesen ist die Antriebseinheit 252 angeordnet.

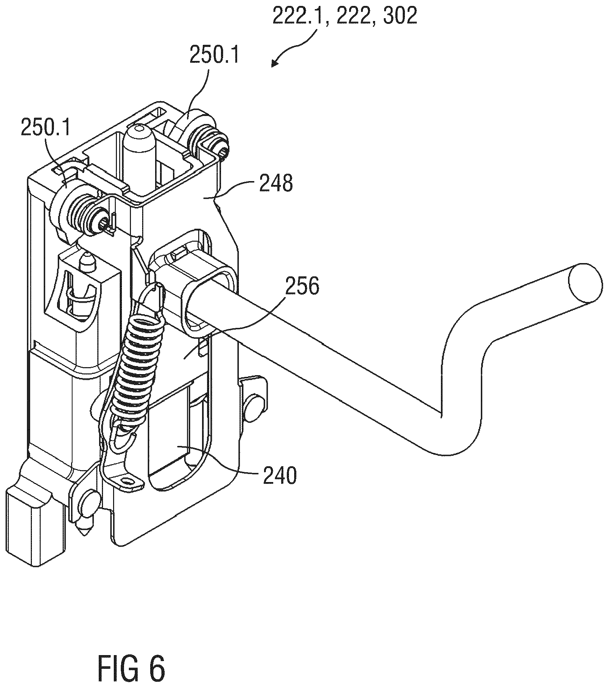

Zusätzlich kann das jeweilige Verriegelungselement 250.1 mittels einer Feder 250.3 in einer verriegelnden Stellung oder Ruheposition 302 (dargestellt in Figuren 6 bis 8) vorgespannt sein.

Die Auslöseeinheit 250 entsperrt bei Auslösung die Antriebseinheit 252, so dass der Stecker 240 angetrieben von der Antriebseinheit 252, insbesondere einem Federelement 252.1, relativ zum Gehäuse 248 von einer Ruheposition 302 (dargestellt in Figuren 6 bis 8) in die Steckposition 300 (dargestellt in Figuren 5, 10, 11) bewegbar ist.

Die Auslöseeinheit 250 (auch Sperreinheit genannt) kann beispielsweise so ausgestaltet sein, dass diese bei Auslösung in eine Auslösestellung (auch Entsperrstellung oder Steckposition 300 genannt, gezeigt in Figuren 5, 10, 11) stellbar ist, wodurch die Antriebseinheit 252 entsperrt (auch aktiviert oder gelöst genannt) wird, die wiederum eine Steckbewegung des Steckers 240 bewirkt.

Die Auslöseeinheit 250 kann beispielsweise mit der Sitzverriegelung 214 der zugehörigen Sitzanordnung 201, einer der Fahrzeugsitze 100, der Sitzgruppe 210 oder der Sitzbank 212 gekoppelt sein. Zusätzlich kann eine Rückstelleinheit 254 für den Stecker 240 vorgesehen sein. Die Rückstelleinheit 254 kann bevorzugt mit der Sitzverriegelung 214 gekoppelt sein.

Die Auslöseeinheit 250 kann zumindest ein bewegbares Verriegelungselement 250.1 umfassen, das in einer ersten Stellung die Antriebseinheit 252 sperrt und den Stecker 240 in einer Ruheposition 302 (auch Sperrstellung oder Öffnungsstellung genannt) hält, wie in Figuren 6 bis 8 gezeigt. Das bewegbare Verriegelungselement 250.1 kann in einer zweiten Stellung die Antriebseinheit 252 entsperren oder freigeben, um den Stecker 240 aus der Ruheposition 302 in die Steckposition 300 zu verstellen, wie in Figuren 5, 10 und 11 gezeigt.

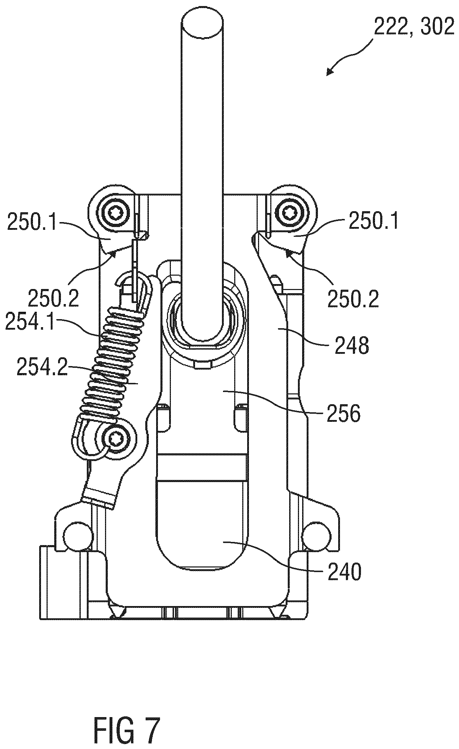

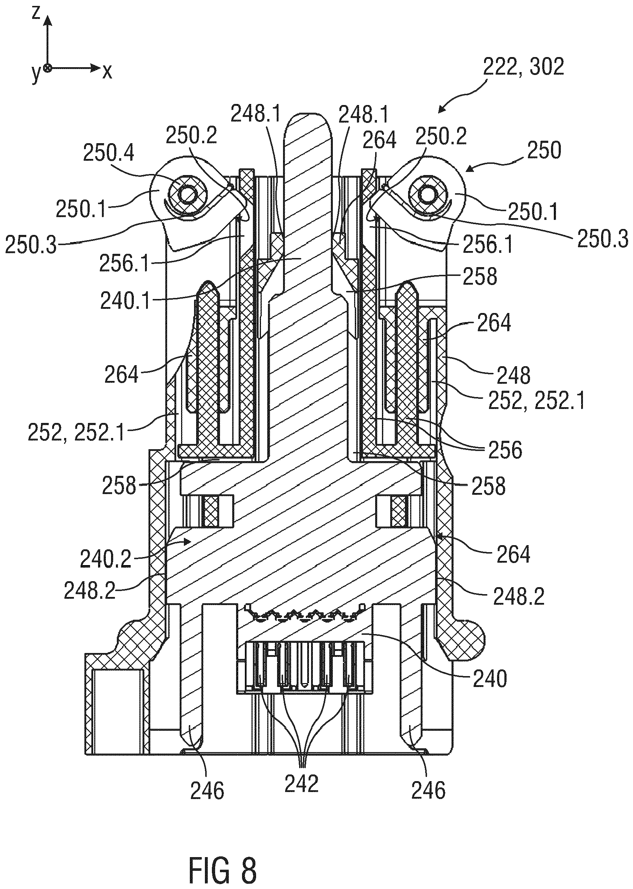

Das Verriegelungselement 250.1 kann um eine Schwenkachse verschwenkbar am Gehäuse 248 gelagert sein. Das Verriegelungselement 250.1 kann einen Sperrabschnitt 250.2 (in Figuren 7 und 8 gezeigt) umfassen, der in der ersten Stellung des Verriegelungselements 250.1 sperrend in eine Sperröffnung 256.1 eines Schiebers 256 eingreift.

Die Steckeinheit 222 ist in Figur 5 entsperrt. Die Steckeinheit 222 ist in der ausgefahrenen Steckposition 300 gezeigt, in welcher der Stecker 240 aus dem Gehäuse 248 herausbewegt ist.

Der Steckverbinder 224 umfasst zumindest die Buchse 230 und die Steckeinheit 222, die miteinander koppelbar sind.

Die Steckeinheit 222 (auch male plug genannt) umfasst zumindest:
- das Gehäuse 248, das die Schnittstelle zur Sitzstruktur des Fahrzeugsitzes 100, der Sitzgruppe 210 oder der Sitzbank 212 bildet,
- die Auslöseeinheit 250 (auch Sperreinheit oder Verriegelungsvorrichtung genannt), die den Stecker 240 in einer Parkposition oder der Ruheposition 302 verriegelt, wenn zum Beispiel der Fahrzeugsitz 100, die Sitzgruppe 210 oder die Sitzbank 212 nicht im Fahrzeug 200 montiert ist,
- einen Schieber 256, der in dem Gehäuse 248 beweglich gelagert und getragen ist, wobei der Schieber 256 nur vertikal im Gehäuse 248 gelagert und geführt ist, und
- den Stecker 240, der sich am Schieber 256 abstützt und mit diesem Schieber 256 beweglich im Gehäuse 248 gelagert ist.

Zusätzlich kann der Stecker 240 mit einem Spiel 258 (dargestellt in Figur 8) im Schieber 256 (auch Halterung genannt) gelagert und gehalten sein.

Das Gehäuse 248 des Steckers 240 kann über eine Führungseinrichtung 264 verfügen, in der der Schieber 256 in vertikaler Richtung (in Hochrichtung z nach oben oder unten) in einer Nut oder einer Hülse, insbesondere in einer Art T-Nut, geführt wird oder führbar ist.

Der Stecker 240 wird durch den Schieber 256 geführt. Der Stecker 240 kann sich relativ zum oder im Schieber 256 mit dem Spiel 258 drehen und/oder bewegen.

Der Stecker 240 weist insbesondere eine der Anzahl der Stecköffnungen der Buchse 230 entsprechende Anzahl von Anschlusskontakten 242 auf. Der Stecker 240 ist der Träger für die elektrischen Kontakte oder Anschlusskontakte 242, zum Beispiel von zehn, sechzehn oder zwanzig Kontakten, die auch für sicherheitsrelevante Funktionen genutzt werden können. Im Inneren des Steckers 240 ist ein Kabelbaum montiert, der die elektrische Verbindung zu den Sitzanwendungen herstellt. Es handelt sich um eine Art Kabelschwanz.

Zur Ausrichtung auf die Buchse 230 verfügt die Steckeinheit 222, insbesondere der Stecker 240 über zwei Positionierstifte 246, die den Stecker 240 so auf die Buchse 230 ausrichten, dass der elektrische Anschluss ohne Beschädigung der elektrischen Stifte oder Anschlusskontakte 242 erfolgen kann. Durch diese Positionierstifte 246 kann ein Toleranzausgleich zwischen Sitz (Fahrzeugsitz 100, Sitzgruppe 210 oder Sitzbank 212) und Fahrzeug 200 ermöglicht werden.

Die als Federelement 252.1 ausgebildete Antriebseinheit 252 führt nach Auslösung oder Entsperrung der Auslöseeinheit 250 mit geringer Kraft den Stecker 240 in die Position, wobei das Federelement 252.1 mit einer solchen Kraft wirkt, dass der Stecker 240 in die Buchse 230 gedrückt wird. Das Federelement 252.1 ist insbesondere als eine Niederkraftfeder (auch Low-Force-Spring genannt) ausgebildet. Das Federelement 252.1 ist beispielsweise zwischen Gehäuse 248 und Schieber 256 angeordnet. Bevorzugt sind zwei identische Federelemente 252.1 als Antriebseinheit 252 vorgesehen.

Zusätzlich zur Niederkraftfeder kann eine Hochkraftfeder 254.1 vorgesehen sein. Die Hochkraftfeder 254.1 wirkt zusätzlich zur Niederkraftfeder (Federelement 252.1) und liefert die erforderliche Kraft, um die Verbindung von Stecker 240 und Buchse 230 (unter Berücksichtigung von Toleranz, Verbindungskraft, Temperatur oder anderen ähnlichen Beanspruchungen) zu halten. Die Hochkraftfeder 254.1 wirkt nur in dem Bereich, in dem der Stecker 240 in die Verbindung mit der Buchse 230 geht und somit im gesteckten Zustand des Steckverbinders 224. Die Hochkraftfeder 254.1 ist zwischen dem Gehäuse 248 und dem Schieber 256 gespannt.

Zusätzlich kann die Steckeinheit 222 ein Magnetelement 260 umfassen, das ein Magnetfeld erzeugt, das von einem in der Buchse 230 oder dem Schieber 256 befindlichen Sensor 122, insbesondere einem Hallsensor, erfasst werden kann.

Die Buchse 230 (auch femal plug genannt) wird an der beweglichen Oberschiene 114 innerhalb des Schienenprofils der Unterschiene 116 (auch Bodenschiene genannt) montiert und stellt die elektrischen Funktionen des Fahrzeugs 200 wie Strom, Kommunikation, Sicherheitsfunktionen oder dergleichen zur Verfügung.

Die Buchse 230 umfasst zumindest:
- Positionsöffnungen 262, komplementär zu den Positionierstiften 246.

Die Positionsöffnungen 262 sind auf die Positionierstifte 246 am Stecker 240 abgestimmt. Durch die Positionsöffnungen 262 (auch Positionslöcher genannt) findet der Stecker 240 die passende Ausrichtung zur Buchse 230, so dass die elektrischen Anschlusskontakte 242 (Stifte oder Pins) korrekt verbunden sind.

Zusätzlich kann die Buchse 230 eine bewegbare, insbesondere schwenkbare oder klappbare, Staubabdeckung 266 umfassen, die beispielsweise die Kontaktgegenelemente 244 abdeckt oder schließt, wenn der Fahrzeugsitz 100, die Sitzgruppe 210 oder die Sitzbank 212 nicht im Fahrzeug 200 montiert ist. Durch eine solche bewegbare Staubabdeckung 266 sind die als elektrische Kontaktöffnungen ausgebildeten Kontaktgegenelemente 244 in der Buchse 230 vor Staub, Partikeln und Wassertropfen und Verschmutzung geschützt.

Der Sensor 122, insbesondere der Hallsensor, ändert den Status, wenn das Magnetelement 260 am Stecker 240 im Bereich des Sensors 122 erscheint, wenn der Fahrzeugsitz 100, die Sitzgruppe 210 oder die Sitzbank 212 im Fahrzeug 200 verbaut und montiert wird.

Der Status des Hallsensors wird verwendet, um zu erkennen, ob sich der Fahrzeugsitz 100, die Sitzgruppe 210 oder die Sitzbank 212 in einer verriegelbaren Position befindet. Nach erfolgreicher elektrischer Verbindung des Fahrzeugsitzes 100, der Sitzgruppe 210 oder der Sitzbank 212 mit dem Fahrzeug 200 wird beispielsweise mittels des Steuergeräts 236 die Information erzeugt, dass der Fahrzeugsitz 100, die Sitzgruppe 210 oder die Sitzbank 212 korrekt verriegelt ist. Andernfalls ist der Fahrzeugsitz 100, die Sitzgruppe 210 oder die Sitzbank 212 (basierend auf dem Hallsensor) nicht korrekt verriegelt aufgrund fehlender Kommunikation zwischen dem Steuergerät 236 am Fahrzeugsitz 100, der Sitzgruppe 210 oder der Sitzbank 212 und den sitzfernen Komponenten im Fahrzeug 200.

Alle Fahrzeugsitze 100, Sitzgruppen 210 und/oder Sitzbänke 212 lassen sich ausbauen und an verschiedenen Positionen im Fahrzeug 200 wieder einbauen. Um einem Steuerungssystem (auch command system), zum Beispiel am Armaturenbrett, im Fahrzeug 200 die korrekte Information zu geben, welcher Fahrzeugsitz 100, welche Sitzgruppe 210 und/oder welche Sitzbank 212 verwendet werden beziehungsweise wird, muss das Fahrzeug 200 erkennen, wo der Fahrzeugsitz 100, die Sitzgruppe 210 oder die Sitzbank 212 montiert ist.

Beispielsweise können an den verschiedenen Sitzplätzen oder Sitzpositionen im Fahrzeug 200 Widerstände eingebaut sein, die sich voneinander unterscheiden. Mit anderen Worten: Die möglichen Sitzplätze oder Sitzpositionen, an denen der Fahrzeugsitz 100, die Sitzgruppe 210 oder die Sitzbank 212 angebracht werden kann, können durch einen entsprechenden Widerstand in der Buchse 230 kodiert sein.

Wenn der Fahrzeugsitz 100, die Sitzgruppe 210 oder die Sitzbank 212 elektrisch mit dem Fahrzeug 200 verbunden ist, prüft das sitzseitige Steuergerät 236 (dargestellt in Figur 4) diesen Widerstand und dessen Position und damit die Identifizierung des Fahrzeugsitzes 100, der Sitzgruppe 210 oder der Sitzbank 212 und sendet eine Information an das Steuerungssystem im Armaturenbrett, in welcher Position der Fahrzeugsitz 100, die Sitzgruppe 210 oder die Sitzbank 212 im Fahrzeug 200 montiert ist oder wurde. Zusätzlich kann diese Positionserkennung mit einer Gurtsensorik zur Sicherheitsgurt-Erinnerung bei fehlendem angelegtem Gurt gekoppelt sein.

Zur Herstellung der elektrischen Verbindung zwischen Stecker 240 und Buchse 230 muss die Verriegelung des Steckers 240 aus der Parkposition oder Ruheposition 302 gelöst oder entriegelt werden.

Die Steckeinheit 222 umfasst beispielsweise als Auslöseeinheit 250 (auch Verriegelungseinheit oder Sperreinheit genannt) zwei federbelastete Verriegelungselemente 250.1, die den Schieber 256 zusammen mit dem Stecker 240 in der Parkposition oder Ruheposition 302 halten, solange der Fahrzeugsitz 100, die Sitzgruppe 210 oder die Sitzbank 212 nicht in das Fahrzeug 200 eingebaut ist. Die Verriegelungselemente 250.1 werden durch ein mechanisches System gesteuert, das mit der Sitzverriegelung 214 des Fahrzeugsitzes 100, der Sitzgruppe 210 oder der Sitzbank 212 im Fahrzeug 200 gekoppelt, beispielsweise über einen nicht dargestellten Bowdenzug oder Gelenkmechanismus oder Hebelmechanismus oder dergleichen bewegungsgekoppelt, ist.

Die Verriegelungselemente 250.1 können automatisch entriegelbar sein. Beispielsweise können diese automatisch aufgrund der zuvor beschriebenen Kopplung entriegelt werden, wenn der Fahrzeugsitz 100, die Sitzgruppe 210 oder die Sitzbank 212 an die Oberschiene 114 montiert und verriegelt wird oder verriegelt ist.

Das jeweilige Verriegelungselement 250.1 kann beispielsweise als ein Exzenter, zum Beispiel eine Exzenterscheibe oder ein Exzenterhebel, ausgebildet sein. Darüber hinaus kann das jeweilige Verriegelungselement 250.1 mittels der Feder 250.3 in einer vorgegebenen Drehwinkelstellung, insbesondere in der Ruheposition 302 (Verriegelungsposition oder Sperrposition genannt, dargestellt in Figuren 7 und 8), arretierbar sein. Insbesondere ist das jeweilige Verriegelungselement 250.1 in einer, der eingestellten Vorspannung der Feder 250.3, insbesondere einer Vorspannfeder, entsprechenden Drehwinkelstellung zur Sicherstellung der lösbaren Verriegelung der Antriebseinheit 252 arretierbar.

Wenn der Fahrzeugsitz 100, die Sitzgruppe 210 oder die Sitzbank 212 beispielsweise in das Fahrzeug 200 montiert wird und verriegelt wird, wird der Stecker 240 automatisch durch die mechanisch entriegelte Auslöseeinheit 250 entriegelt und mittels der Antriebseinheit 252 angetrieben. Beispielsweise verriegelt / entriegelt das als ein Entriegelungsexzenter ausgebildete Verriegelungselement 250.1 in Abhängigkeit vom Verriegelungszustand des Fahrzeugsitzes 100, der Sitzgruppe 210 oder der Sitzbank 212 im Fahrzeug 200. Die Verriegelungselemente 250.1 sind mit dem Schieber 256 verriegelt, der den Stecker 240 in der Steckverbindung führt.

Bei gelösten Verriegelungselementen 250.1 wird der Stecker 240 über den Schieber 256 durch das Gehäuse 248 zur Verbindung mit den Stecköffnungen (Kontaktgegenelementen 244) der Buchse 230 an der Unterschiene 116 geführt.

Figur 6 zeigt die Steckeinheit 222 in perspektivischer Darstellung mit dem Stecker 240 in Ruheposition 302. Der Schieber 256 ist innerhalb des Gehäuses 248 in einer oberen Lage mittels der Verriegelungselemente 250.1 gehalten.

Figur 7 zeigt die Steckeinheit 222 in Seitenansicht mit dem Stecker 240 in Ruheposition 302. Die Verriegelungselemente 250.1 sind in das Gehäuse 248 hineingeschwenkt und sperren den Schieber 256 und damit den mit diesem verbundenen oder von diesem gehaltenen Stecker 240 gegen eine Längsbewegung nach unten aus der Ruheposition 302 heraus in die Steckposition 300 (gezeigt in Figur 5).

Die Hochkraftfeder 254.1 wirkt mit einem Hebel 254.2 zusammen, um die erforderliche Kraft zum Einschieben des Steckers 240, insbesondere der Positionierstifte 246, in die Buchse 230 zu erzeugen oder zu bewirken, wie dies nachfolgend näher beschrieben wird.

Figur 8 zeigt die Steckeinheit 222 in der Ruheposition 302. Das Gehäuse 248 des Steckers 240 verfügt über die Führungseinrichtung 264, in der der Schieber 256 in vertikaler Richtung (in Hochrichtung z nach oben oder unten) in einer Nut oder einer Hülse, insbesondere in einer Art T-Nut, geführt wird oder führbar ist.

Die Führungseinrichtung 264 ist ausgebildet, nur in vertikale Richtung oder Hochrichtung z eine Bewegung und Führung zuzulassen. Die Funktion der Führungseinrichtung 264 ist es, eine korrekte Ausrichtung des Steckers 240 zu der Buchse 230 unabhängig von der aufgebrachten Kraft zu ermöglichen.

Zur Bereitstellung einer geeigneten Verbindungskraft für eine sichere Verbindung über die gesamte Nutzungsdauer unter allen Bedingungen wird eine entsprechende Kraft, insbesondere Antriebskraft, zum automatischen Verbinden des Steckers 240 mit der Buchse 230 benötigt. Diese hängt insbesondere von dem gewählten elektrischen Stift ab. Diese wird nach der Anforderung geeigneter Zyklen ausgewählt. Darauf aufbauend besteht der Steckverbinder 224 aus einem System von Federn, insbesondere der als Niederkraftfeder ausgebildeten Federelemente 252.1 zur Zuführung des Steckers 240 in die Buchse 230 und somit zur Verbindungsherstellung und der Hochkraftfeder 254.1 (in Figur 5 gezeigt) zur Aufrechterhaltung der Verbindung des Steckers 240 in der Buchse 230 (in Figur 5 gezeigt).

Mit anderen Worten: Um den Stecker 240 in eine mögliche Verbindungsposition zu bringen, wird eine geringere Kraft benötigt als beim Steckvorgang. Es handelt sich um zwei Federelemente 252.1, die den Schieber 256 mit dem Stecker 240 aus der verriegelten Position oder der Ruheposition 302 nach unten in Richtung Buchse 230 in die Steckposition 300 (dargestellt in Figuren 5, 10, 11) drücken.

Nachdem der Stecker 240 die Buchse 230 erreicht hat, wird die Hochkraftfeder 254.1 (dargestellt in Figuren 5 bis 7) durch geometrische Gegebenheiten, insbesondere Konturen, aktiviert. Die Hochkraftfeder 254.1 wirkt mit dem Hebel 254.2 (dargestellt in Figur 7) zusammen, um die erforderliche Kraft zum Einschieben des Steckers 240, insbesondere der Positionierstifte 246, in die Buchse 230 zu erzeugen oder zu bewirken.

Zur Bereitstellung eines Toleranzausgleichs zum Ausgleich von Toleranzen, insbesondere Bauteiltoleranzen, während der Fahrzeugsitz 100, die Sitzgruppe 210 oder die Sitzbank 212 am oder im Fahrzeug 200 montiert wird und während der Fahrzeugsitz 100, die Sitzgruppe 210 oder die Sitzbank 212 in Gebrauch ist, zum Beispiel im eingebauten Zustand während einer Fahrt des Fahrzeugs 200, sind mehrere Spiele 258 (auch Toleranzspalt genannt) zwischen Stecker 240 und Schieber 256 und/oder zwischen Schieber 256 und Gehäuse 248 vorgesehen.

Mit anderen Worten: Der Steckverbinder 224 aus Steckeinheit 222 und Buchse 230 bietet die Möglichkeit, Toleranzen zwischen dem Fahrzeugsitz 100, der Sitzgruppe 210 oder der Sitzbank 212 und der Oberschiene 114 während der Montage des Fahrzeugsitzes 100, der Sitzgruppe 210 oder der Sitzbank 212 auszugleichen und darüber hinaus zusätzliche Toleranzen aufgrund von Relativbewegungen des Fahrzeugsitzes 100, der Sitzgruppe 210 oder der Sitzbank 212 gegenüber der Oberschiene 114 und/oder dem Fahrzeug 200, zum Beispiel seitliche Belastungen, Vorwärts- und Rückwärtsbewegungen, auszugleichen.

Der Steckverbinder 224 ist eingerichtet, eine freie Bewegung, Lücken in Form eines Spiels 258 zwischen dem Stecker 240 und dem Schieber 256 und/oder Gehäuse 248 ohne zusätzliche Belastung der elektrischen Kontakte zu ermöglichen.

Dazu hat der Stecker 240 die mindestens zwei Positionierstifte 246, die einen Konus haben, der mit der Gegenkontur in der Buchse 230 übereinstimmt. Er ist in der Lage, die Abweichung von zum Beispiel 2 mm in alle Richtungen auszugleichen. Der maximale Toleranzausgleich kann über das Maß der Abmessung des jeweiligen Positionierstiftes 246 eingestellt werden. Wenn der Stecker 240 einmal vollständig in die Buchse 230 eingesteckt ist, bekommt der Stecker 240 aufgrund der geometrischen Gegebenheiten mehr Spiel 258 und somit zusätzliche Relativbewegungen zwischen dem Stecker 240, der durch die Positionierstifte 246 und die als elektrische Stifte ausgebildeten Anschlusskontakte 242 in die Buchse 230 gesteckt und somit elektrisch gekoppelt und gehalten ist.

Der Toleranzausgleich in Hochrichtung z erfolgt durch die vertikale Bewegung des Steckers 240 und des Schiebers 256 innerhalb des Gehäuses 248. Der Steckverbinder 224 erlaubt es, dass der Stecker 240 zum Beispiel mindestens 2 mm tiefer liegen kann. Durch diesen vertikalen Toleranzausgleich kann auch im Falle eines Crashs eine elektrische Verbindung gewährleistet werden.

Die als Vorspannfeder ausgebildete Feder 250.3 ist einerseits an dem Gehäuse 248 oder einem Drehlager 250.4 für das Verriegelungselement 250.1 und andererseits an dem Verriegelungselement 250.1 angelenkt.

Der Verbindungsvorgang wird im Folgenden beschrieben:
Es gibt drei verschiedene Phasen, in denen sich der Schieber 256 zusammen mit dem Stecker 240 aus der verriegelten Position oder Ruheposition 302 nach unten bewegt und nach dem Loslassen in die vollständig verbundene Position oder Steckposition 300 übergeht.

### Phase 1: Vorschub (auch Antrieb genannt)

Der Schieber 256 und der Stecker 240 verlassen nach Auslösung der Auslöseeinheit 250, insbesondere Entriegelung der Verriegelungselemente 250.1 aus Sperröffnungen 256.1 im Schieber 256, die Parkposition oder Ruheposition 302. Das Gehäuse 248 ist derart eingerichtet, dass sowohl der Schieber 256 als auch der Stecker 240 nach dem Lösen eng im Gehäuse 248 führbar sind oder geführt werden.

Beispielsweise weist das Gehäuse 248 als ein Teil der Führungseinrichtung 264 eine erste innere Verengung 248.1 für ein kontaktabgewandtes, oberes Steckerende 240.1 und eine zweite innere Verengung 248.2 für ein kontaktzugewandtes, unteres Steckerende 240.2 auf. Der Stecker 240 wird somit im Gehäuse 248 nach unten geführt, bis der Stecker 240 einen bestimmten Abstand zur Buchse 230 hat.

Das obere Steckerende 240.1 ist als ein Führungsstift ausgebildet.

In dieser Phase drücken die Federelemente 252.1 mit geringer Kraft den Stecker 240 nach unten, bis die Hochkraftfeder 254.1 (dargestellt in Figuren 5 bis 7) mit hoher Kraft die Funktion übernimmt.

In der ersten Phase (auch geführte Phase genannt) wird das als Führungsstift oder Kegel ausgebildete obere Steckerende 240.1 in der ersten inneren Verengung 248.1 durch das Gehäuse 248 geführt.

Eine nachfolgende zweite Phase (auch Justierfindung oder Justierphase genannt) tritt ein, kurz bevor die Positionierstifte 246 in die passenden Bohrungen in der Buchse 230 eintauchen. Dabei hat das obere Steckerende 240.1 die erste innere Verengung 248.1 verlassen und erhält dadurch ein größeres Spiel 258 im Gehäuse 248. Dadurch kann der Stecker 240 die richtige Position relativ zur Buchse 230 finden.

Die Positionierstifte 246 führen dann den Stecker 240 in die richtige Richtung. In dieser Justierphase übernimmt die Hochkraftfeder 254.1 die Funktion, den Schieber 256 anzutreiben. In der zweiten Phase wird der Stecker 240 weitgehend nicht geführt - er ist frei beweglich.

Die dritte Phase ist die Verbindungsphase oder Kontaktierungsphase.

Der Stecker 240, insbesondere dessen Anschlusskontakte 242, wird in die Buchse 230 gesteckt. Durch die Positionierstifte 246 wird der Stecker 240 in die richtige Richtung geschoben und geführt, so dass die elektrischen Stifte oder Anschlusskontakte 242 das Gegenstück, die Kontaktgegenelemente 244 (dargestellt in Figur 5) in der Buchse 230 ohne Beschädigung finden. In dieser dritten Phase drückt die Hochkraftfeder 254.1 den Stecker 240 in die Buchse 230.

Zum Trennen der elektrischen Verbindung und damit des Steckers 240 von der Buchse 230 ist die Steckeinheit 222 mit der Sitzverriegelung 214 gekoppelt.

Der Stecker 240 wird automatisch aus der Buchse 230 entfernt und von dieser entkoppelt, wenn der Benutzer die mechanische Sitzverriegelung 214 zwischen Fahrzeugsitz 100, Sitzgruppe 210 oder Sitzbank 212 und Fahrzeug 200, insbesondere zwischen Oberschiene 114 und Unterschiene 116, löst. Der Stecker 240 bietet beispielsweise eine mechanische Schnittstelle, insbesondere den Hebel 254.2 (dargestellt in Figur 7), der bei Betätigung der Sitzverriegelung 214 mitbetätigt wird und den Stecker 240 anhebt und somit diesen von der Buchse 230 löst, beispielsweise wenn der Benutzer des Fahrzeugsitzes 100, der Sitzgruppe 210 oder der Sitzbank 212 diesen/diese aus dem Fahrzeug 200 entfernen möchte. Die Kopplung von Sitzverriegelung 214 und Hebel 254.2 ist derart eingerichtet, dass sichergestellt ist, dass der Stecker 240 vollständig aus der Buchse 230 entfernt wird, bevor die als Klauenbefestigung ausgebildete Befestigungsmechanik den Fahrzeugsitz 100, die Sitzgruppe 210 oder die Sitzbank 212 von der Oberschiene 114 löst.

Beim Herausziehen des Steckers 240 aus der Buchse 230 und Hineinbewegen in das Gehäuse 248 des Steckverbinders 224 findet das obere Steckerende 240.1 unabhängig von der Toleranzsituation zwischen Fahrzeugsitz 100, Sitzgruppe 210 oder Sitzbank 212 und Fahrzeug 200, insbesondere Oberschiene 114, seine ursprüngliche Verriegelungsposition und wird in die erste innere Verengung 248.1 des Gehäuses 248 geführt.

Beim Zurückfahren des Steckers 240, insbesondere des oberen Steckerendes 240.1 in die ursprüngliche Parkposition oder Ruheposition 302 gibt das Gehäuse 248 dem Kegel oder oberen Steckerende 240.1 die entsprechende Form, um in die ursprüngliche Parkposition oder Ruheposition 302 geführt zu werden. Aufgrund dieser ersten inneren Verengung 248.1 kommt der Stecker 240 in die Ausgangsposition oder Ruheposition 302 zurück und die federbelasteten Verriegelungselemente 250.1 schwenken automatisch in die Sperröffnungen 256.1 ein. Der Stecker 240 ist wieder verriegelt in der Ruheposition 302. Aus dieser gesperrten oder verriegelten Ruheposition 302 kann der Stecker 240 automatisch durch Betätigung der Sitzverriegelung 214 wieder entriegelt werden, wenn der Fahrzeugsitz 100, die Sitzgruppe 210 oder die Sitzbank 212 wieder im Fahrzeug 200 montiert wird.

Bei dieser Bewegung des Steckers 240 zurück in die Ausgangsposition oder Ruheposition 302 bewegt sich der Schieber 256 entsprechend zum Stecker 240 zurück, so dass der Schieber 256 von den Verriegelungselementen 250.1 aufgefangen wird, indem diese in die Sperröffnungen 256.1 des Schiebers 256 einfallen.

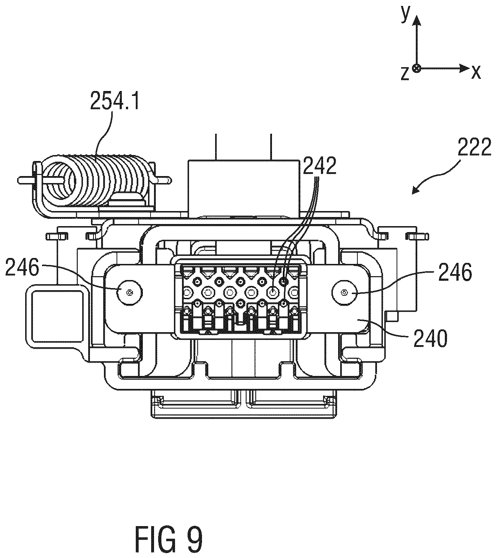

Figur 9 zeigt die Steckeinheit 222 in einer Ansicht von unten. Der Stecker 240 weist eine Mehrzahl von Anschlusskontakten 242 auf. Die Positionierstifte 246 sind seitlich neben den Anschlusskontakten 242 angeordnet. Die Positionierstifte 246 weisen größere Abmessungen, sowohl in Länge als auch in Breite, als die Anschlusskontakte 242 auf.

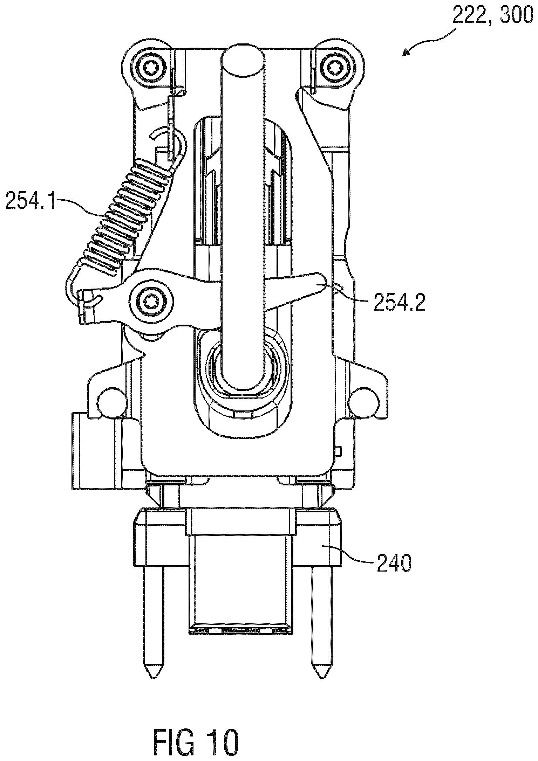

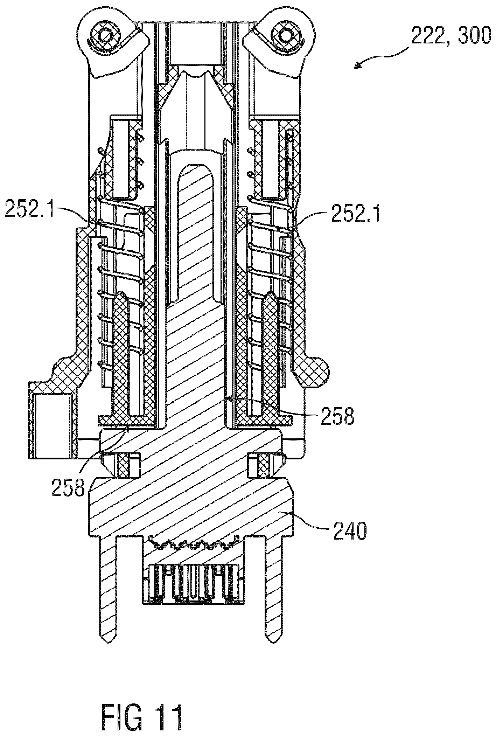

Figur 10 zeigt in Seitenansicht die Steckeinheit 222 in der Steckposition 300. Figur 11 zeigt in Schnittdarstellung die Steckeinheit 222 in der Steckposition 300.

Der Stecker 240 ist aus dem Gehäuse 248 teilweise ausgefahren. Die Federelemente 252.1 sind entspannt. Die Hochkraftfeder 254.1 drückt mittels des Hebels 254.2 auf den Schieber 256 und damit den Stecker 240, um diesen in der Steckposition 300 in der Buchse 230 gesteckt zu halten.

Der Stecker 240 ist mit Spiel 258 in dem Schieber 256 angeordnet und gehalten.

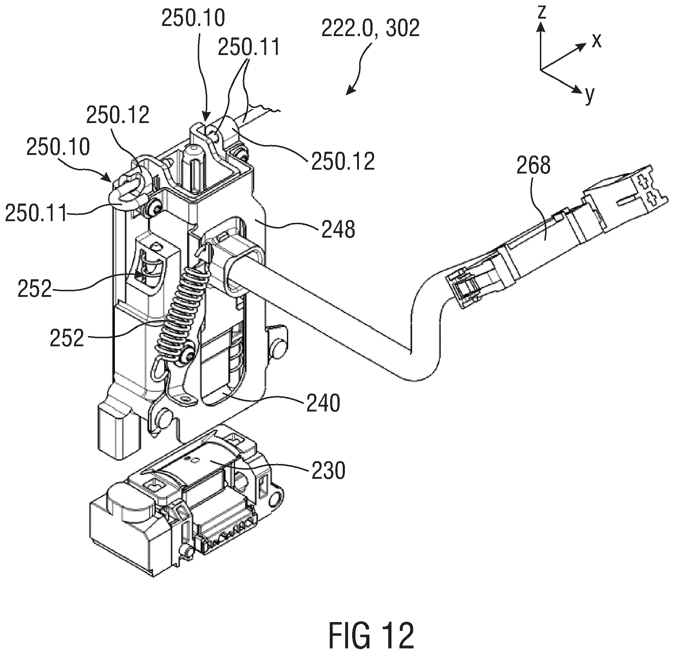

Figur 12 zeigt schematisch in perspektivischer Darstellung eine alternative Steckeinheit 222.0 in der Sperrposition oder Ruheposition 302. Die alternative Steckeinheit 222.0 unterscheidet sich von der zuvor beschriebenen Steckeinheit 222 lediglich in einem alternativen Verriegelungselement 250.10.

Anstelle von Exzentern, wie in Figuren 5 bis 8 und 10, 11 dargestellt, ist das jeweilige Verriegelungselement 250.10 als ein Verriegelungsstift 250.11 ausgebildet.

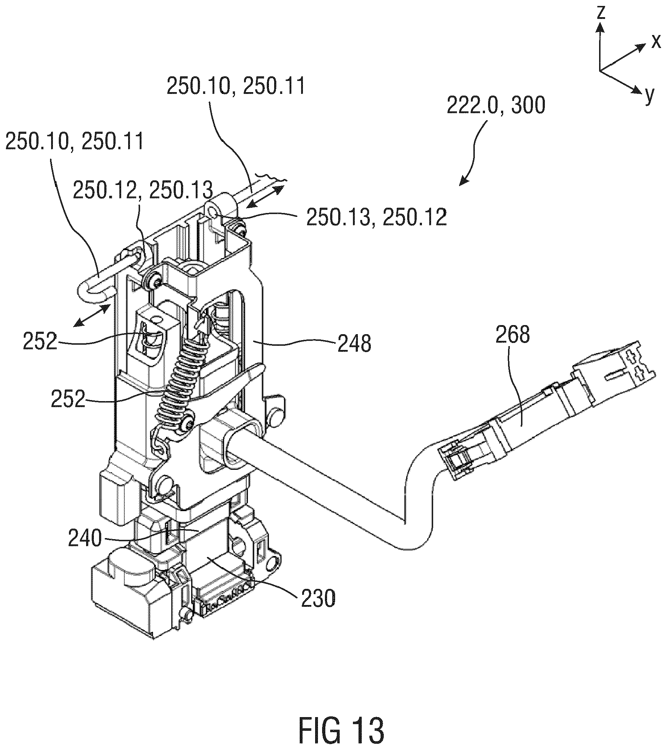

Das alternative Verriegelungselement 250.10 ist bewegbar am Gehäuse 248, insbesondere linear bewegbar, gelagert. Das alternative Verriegelungselement 250.10 sperrt in einer ersten Stellung die Antriebseinheit 252 und hält den Stecker 240 in seiner Ruheposition 302. In einer zweiten Stellung entsperren die Verriegelungselemente 250.10 die Antriebseinheit 252, um den Stecker 240 aus der Ruheposition 302 (dargestellt in Figuren 12, 14, 15) in die Steckposition 300 in die Buchse 230 (dargestellt in Figur 13) zu verstellen.

Zur Verriegelung der Antriebseinheit 252 können beispielsweise je Verriegelungsstift 250.11 die Verriegelungsöffnungen oder Sperröffnungen 256.1 im Schieber 256 (auch Schlitten genannt) vorgesehen sein.

Zur Stellung der Verriegelungsstifte 250.11 in die Ruheposition 302 können diese Verriegelungsstifte 250.11 von einem mit den Verriegelungsstiften 250.11 wirkverbundenen mechanischen Verriegelungssystem (nicht dargestellt, zum Beispiel in die Ruheposition 302, stellbar oder bringbar, insbesondere linear verstellbar oder gesteuert stellbar, sein.

Die alternative Steckeinheit 222.0 kann zwei einander gegenüber liegende und synchron zueinander oder voneinander wegbewegbare Verriegelungsstifte 250.11 umfassen. Die Verriegelungsstifte 250.11 sind beispielsweise als ein Stift, ein Bolzen, ein U-Profil, ein L-Profil oder dergleichen ausgebildet. Das Gehäuse 248 umfasst am oberen, insbesondere steckerabgewandten, Gehäuseende zwei Stiftlager 250.12 auf, in welchen der jeweilige Verriegelungsstift 250.11 verliersicher und linear beweglich gelagert ist.

Des Weiteren ist in dieser Figur 12 eine elektrische Schnittstelle 268 zur Kontaktierung der alternativen Steckeinheit 222 mit einer Stromversorgung, der Steuereinheit und/oder anderen elektrischen Komponenten vorgesehen.

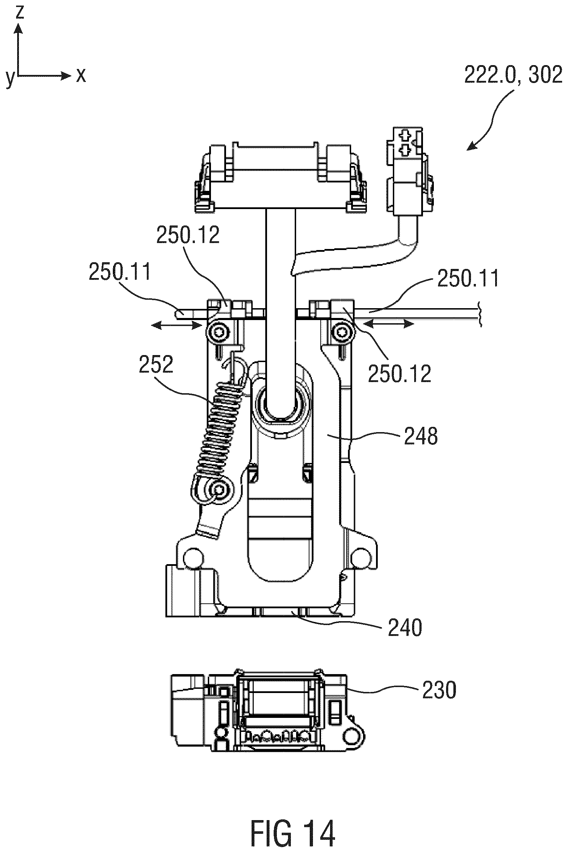

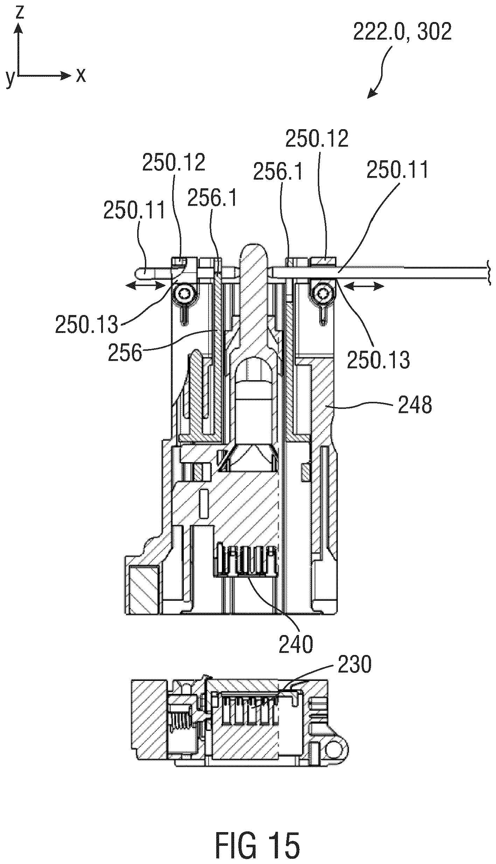

Figur 13 zeigt schematisch in perspektivischer Darstellung die alternative Steckeinheit 222.0 gemäß Figur 12 mit dem alternativen Verriegelungselement 250.10 aber in der Steckposition 300 (auch Sperrposition oder Verriegelungsposition genannt). Figur 14 zeigt schematisch in Seitenansicht die alternative Steckeinheit 222.0 mit dem alternativen Verriegelungselement 250.10 in der Ruheposition 302 gemäß Figur 12 und Figur 15 zeigt schematisch in Schnittdarstellung die alternative Steckeinheit 222.0 gemäß Figur 14.

Die Verriegelungsstifte 250.11 sind beispielsweise als L-förmige Stifte ausgebildet. Das Stiftlager 250.12 ist insbesondere als eine hohlzylindrische Lagerbuchse 250.13 ausgebildet.

Die Funktion und die Verriegelungsbewegung oder die Steckbewegung werden analog, wie zu der Steckeinheit 222 beschrieben, auch bei der alternativen Steckeinheit 222.0 ausgeführt.

### Bezugszeichenliste

- 100: Fahrzeugsitz, Sitz
- 102: Sitzteil
- 104: Rückenlehne
- 106: Beschlag
- 108: Drehachse
- 110: Längsverstelleinrichtung
- 112: Schienenanordnung
- 114: erstes Schienenelement (Oberschiene)
- 116: zweites Schienenelement (Unterschiene)
- 118: Schienenpaar
- 120: Befestigungsbereich
- 122: Sensor

- 200: Fahrzeug
- 201: Sitzanordnung
- 202: zweite Sitzreihe
- 204: dritte Sitzreihe
- 206: Bodenbereich
- 208: Sitzfläche
- 210: Sitzgruppe
- 212: Sitzbank
- 214: Sitzverriegelung

- 220: Kontaktierungsbereich
- 222: Steckeinheit
- 222.0: alternative Steckeinheit
- 222.1: Montagemodul
- 224: Steckverbinder
- 226: Attrappe
- 228: Gegenkontaktierungsbereich
- 230: Buchse
- 232: Kabelkassette
- 234: Kabel
- 236: Steuergerät
- 238: Kontaktierungsvorrichtung
- 240: Stecker
- 240.1: oberes Steckerende
- 240.2: unteres Steckerende
- 242: Anschlusskontakt
- 244: Kontaktgegenelement
- 246: Positionierstift
- 248: Gehäuse
- 248.1: erste innere Verengung
- 248.2: zweite innere Verengung
- 250: Auslöseeinheit
- 250.1: Verriegelungselement
- 250.10: alternatives Verriegelungselement
- 250.11: Verriegelungsstift
- 250.12: Stiftlager
- 250.13: Lagerbuchse
- 250.2: Sperrabschnitt
- 250.3: Feder
- 250.4: Drehlager
- 252: Antriebseinheit
- 252.1: Federelement
- 254: Rückstelleinheit
- 254.1: Hochkraftfeder
- 254.2: Hebel
- 256: Schieber
- 256.1: Sperröffnung
- 258: Spiel
- 260: Magnetelement
- 262: Positionsöffnung
- 264: Führungseinrichtung
- 266: Staubabdeckung
- 268: elektrische Schnittstelle

- 300: Steckposition (Entriegelungs-/Freigabeposition)
- 302: Ruheposition (Sperr-/Verriegelungsposition)

- x: Längsrichtung
- y: Querrichtung
- z: Vertikalrichtung

## Patentansprüche

1. Steckeinheit (222) für einen Steckverbinder (224), wobei die Steckeinheit (222) mindestens:
- ein Gehäuse (248),
- einen Stecker (240) mit einer Anzahl von Steckkontakten,
- eine Auslöseeinheit (250), die beweglich an dem Gehäuse (248) gelagert ist, und
- eine Antriebseinheit (252) umfasst,
wobei die Auslöseeinheit (250) bei Auslösung die Antriebseinheit (252) entsperrt oder freigibt, so dass der Stecker (240) angetrieben von der Antriebseinheit (252) relativ zum Gehäuse (248) von einer Ruheposition (302) in eine Steckposition (300) bewegbar ist.

2. Steckeinheit (222) nach Anspruch 1,
ausgebildet als ein Montagemodul (222.1).

3. Steckeinheit (222) nach Anspruch 1;
wobei die Auslöseeinheit (250) an einem oberen Ende des Gehäuses (248) beweglich, insbesondere schwenkbar, gelagert ist.

4. Steckeinheit (222) nach einem der Ansprüche 1 bis 3,
wobei die Auslöseeinheit (250) zumindest ein bewegbares Verriegelungselement (250.1) umfasst, das in einer ersten Stellung die Antriebseinheit (252) sperrt und den Stecker (240) in der Ruheposition (302) hält und in einer zweiten Stellung die Antriebseinheit (252) entsperrt, um den Stecker (240) aus der Ruheposition (302) in die Steckposition (300) zu verstellen.

5. Steckeinheit (222) nach Anspruch 4,
wobei das Verriegelungselement (250.1) um eine Schwenkachse verschwenkbar oder linear bewegbar am Gehäuse (248) gelagert ist.

6. Steckeinheit (222) nach Anspruch 4 oder 5,
wobei das Verriegelungselement als ein Exzenter, insbesondere ein Entriegelungsexzenter, insbesondere eine Exzenterscheibe, oder als ein Verriegelungsstift (250.11) ausgebildet ist.

7. Steckeinheit (222) nach einem der Ansprüche 4 bis 6,
wobei das Verriegelungselement mittels einer Feder in einer vorgegebenen Drehwinkelstellung arretierbar ist.

8. Steckeinheit (222) nach einem der Ansprüche 4 bis 7,
wobei das Verriegelungselement (250.1) einen Sperrabschnitt (250.2) umfasst, der in der ersten Stellung des Verriegelungselements (250.1) sperrend in eine Sperröffnung (256.1) eines Schiebers (256) eingreift.

9. Steckeinheit (222) nach Anspruch 8,
wobei der Schieber (256) mit der Antriebseinheit (252) bewegungsgekoppelt ist.

10. Steckeinheit (222) nach Anspruch 8 oder 9,
wobei der Schieber (256) beweglich im Gehäuse (248) gelagert und geführt ist.

11. Steckeinheit (222) nach Anspruch 10,
wobei der Stecker (240) sich am Schieber (256) abstützt oder von diesem gehalten ist und mit diesem Schieber (256) beweglich im Gehäuse (248) gelagert und geführt ist.

12. Steckverbinder (224), umfassend eine Steckeinheit (222) nach einem der vorhergehenden Ansprüche und eine zu der Steckeinheit (222) komplementäre Buchse (230), wobei der Stecker (240) bei der Bewegung in die Steckposition (300) automatisch mit der Buchse (230) kontaktiert.

13. Sitzanordnung (201) mit mindestens einem Sitz (100), einer Sitzgruppe (210) und/oder einer Sitzbank (212), wobei der Sitz (100), die Sitzgruppe (210) oder die Sitzbank (212) jeweils mindestens eine Steckeinheit (222) nach einem der vorhergehenden Ansprüche umfasst.

14. Sitzanordnung (201) nach Anspruch 13, wobei der Sitz (100), die Sitzgruppe (210) oder die Sitzbank (212) jeweils zwei Steckeinheiten (222) umfassen, die derart montiert sind, dass der Sitz (100), die Sitzgruppe (210) oder die Sitzbank (212) jeweils in unterschiedlichen Ausrichtungen montierbar und mittels einer der Steckeinheiten (222) mit einer komplementären Buchse (230) koppelbar ist.

15. Fahrzeug (200) mit einer Sitzanordnung (201) nach Anspruch 13 oder 14.
